(19) Europäisches Patentamt
European Patent Office
Office européen des brevets

(11) **EP 4 343 273 A1**

(12) **EUROPEAN PATENT APPLICATION**
published in accordance with Art. 153(4) EPC

(43) Date of publication:
**27.03.2024 Bulletin 2024/13**

(21) Application number: **22804242.0**

(22) Date of filing: **02.02.2022**

(51) International Patent Classification (IPC):
**G01B 11/04** (2006.01) **G01S 17/32** (2020.01)

(52) Cooperative Patent Classification (CPC):
**G01B 11/04; G01S 17/32**

(86) International application number:
**PCT/JP2022/004005**

(87) International publication number:
**WO 2022/244320 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2021 JP 2021083487**
**26.07.2021 JP 2021121731**

(71) Applicant: **Panasonic Intellectual Property Management Co., Ltd.**
**Kadoma-shi, Osaka 571-0057 (JP)**

(72) Inventors:
• **INADA Yasuhisa**
**Kadoma-shi**
**Osaka 571-0057 (JP)**
• **HISADA Kazuya**
**Kadoma-shi**
**Osaka 571-0057 (JP)**
• **NAKAMURA Kazuki**
**Kadoma-shi**
**Osaka 571-0057 (JP)**
• **KATO Yumiko**
**Kadoma-shi**
**Osaka 571-0057 (JP)**
• **HASHIYA Akira**
**Kadoma-shi**
**Osaka 571-0057 (JP)**

(74) Representative: **Grünecker Patent- und Rechtsanwälte**
**PartG mbB**
**Leopoldstraße 4**
**80802 München (DE)**

(54) **MEASUREMENT DEVICE AND PROGRAM**

(57)    A measurement device includes: a light source which emits laser light to irradiate a moving body and which can vary the frequency of the laser light; an interference optical system that separates the laser light into reference light and output light, and generates interference light by interfering the reference light with at least one reflected light beam generated when at least one light beam obtained from the output light is reflected by the moving body; a light detector that detects the interference light; and a processing circuit that processes a signal outputted from the light detector. The processing circuit generates and outputs a plurality of attribute data pertaining to the moving body on the basis of measurement data on the moving body obtained by processing the signal.

FIG. 1A

**(Cont. next page)**

EP 4 343 273 A1

FIG. 1B

**Description**

Technical Field

The present disclosure relates to a measurement device and a program.

Background Art

The Electronic Toll Collection (ETC) system is a system for paying a toll on a toll road such as an expressway without having to stop a vehicle at a toll booth. The toll is determined according to the class of vehicle and a fee schedule for the road on which the vehicle is traveling. The class of vehicle is classified according to attribute information about the vehicle, such as the size and number of axles, for example. The fee schedule for the road on which the vehicle is traveling is classified into a flat rate system, in which the fee is determined according to the section of road traveled, and a distance-based fee system, in which the fee is determined according to the distance traveled. When a vehicle passes through an ETC lane, bidirectional communication takes place between the in-vehicle equipment installed in the vehicle and a roadside antenna installed in the lane, and data necessary to calculate the toll, such as information on the entrance toll booth and class of vehicle, is exchanged. In this way, the tool is calculated.

In ETC, vehicles are individually recognized by vehicle detectors, and the recognition results are used as a basis for performing processes such as initiating and terminating bidirectional communication, switching a roadside indicator, and opening or closing a gate, for example. Many vehicle detectors are optical detectors, with multiple vehicle detectors each positioned in accordance with multiple types of determinations, such as vehicle length and direction of travel. In addition, to calculate the toll, ETC may determine whether a vehicle with a towing structure is towing or not and count the number of axles on a large vehicle with a lift axle function. At present, a treadle sensor anchored to the ground is used as an axle sensor to count the number of axles. Changing this sensor to an optical sensor as well has been proposed.

PTL 1 discloses a vehicle type identification device that detects a specific part of a vehicle using what is referred to as time of flight (ToF) technology. PTL 2 discloses a system that detects the axles of a vehicle on the basis of three-dimensional data about the vehicle acquired by a three-dimensional imaging device.

Citation List

Patent Literature

PTL 1: Japanese Unexamined Patent Application Publication No. 2003-203291 Non Patent Literature

PTL 2: Japanese Patent No. 5478419

NPL 1: Christopher V. Poulton et al., "Frequency-modulated Continuous-wave LIDAR Module in Silicon Photonics", OFC2016, W4E.3 (2016).

Summary of Invention

Technical Problem

The present disclosure provides a measurement device that generates a plurality of attribute data indicating a corresponding plurality of attribute information pertaining to a moving body.

Solution to Problem

In one aspect of the present disclosure, a measurement device includes: a light source which emits laser light to irradiate a moving body and which can vary the frequency of the laser light; an interference optical system that separates the laser light into reference light and output light, and generates interference light by interfering the reference light with at least one reflected light beam generated when at least one light beam obtained from the output light is reflected by the moving body; a light detector that detects the interference light; and a processing circuit that processes a signal outputted from the light detector, wherein the processing circuit generates and outputs a plurality of attribute data pertaining to the moving body on the basis of measurement data on the moving body obtained by processing the signal.

It should be noted that general or specific aspects of the present disclosure may also be implemented as a system, a device, a method, an integrated circuit, a computer program, a computer-readable recording medium such as a recording disk, or any selective combination thereof. The computer-readable recording medium may include a nonvolatile recording medium such as Compact Disc - Read-Only Memory (CD-ROM), for example. A device may also include one or more devices. In the case where a device includes two or more devices, the two or more devices may be disposed inside a single piece of equipment or disposed separately in two or more discrete pieces of equipment. In the specification and claims herein, a "device" may not only refer to a single device, but also to a system including a plurality of devices. The plurality of devices included in the "system" may also include a device which is installed in a remote location distant from another device and which is connected via a communication network.

Advantageous Effects of Invention

According to the technology of the present disclosure, a measurement device that generates a plurality of attribute data pertaining to a moving body can be achieved.

Brief Description of Drawings

[Fig. 1A] Fig. 1A is a block diagram schematically illustrating a configuration of a measurement device according to an exemplary embodiment of the present disclosure.

[Fig. 1B] Fig. 1B is a block diagram schematically illustrating a configuration of a measurement device according to a modification of the present embodiment.

[Fig. 2A] Fig. 2A is a diagram schematically illustrating change over time in the frequency of reference light and a reflected light beam in the case where a moving body is stationary.

[Fig. 2B] Fig. 2B is a diagram schematically illustrating change over time in the frequency of reference light and a reflected light beam in the case where a moving body approaches the measurement device.

[Fig. 3A] Fig. 3A is a side view schematically illustrating an example in which a moving body is scanned by one of a plurality of light beams $20L_{2b}$.

[Fig. 3B] Fig. 3B is a top view schematically illustrating an example in which a moving body is irradiated by a plurality of light beams from the side.

[Fig. 3C] Fig. 3C is a front view schematically illustrating an example in which a moving body is irradiated by a plurality of light beams from the side.

[Fig. 4A] Fig. 4A is a diagram schematically illustrating a first example of change over time in measured speed and measured distance in three channels at different heights.

[Fig. 4B] Fig. 4B is a diagram schematically illustrating a second example of change over time in measured speed and measured distance in three channels at different heights.

[Fig. 5] Fig. 5 is an enlarged view of a rotating wheel as part of a moving body.

[Fig. 6A] Fig. 6A is a front view schematically illustrating another example in which a moving body is irradiated by a plurality of light beams from the side.

[Fig. 6B] Fig. 6B is a diagram schematically illustrating the relationship between measured speed and time in a case where a light beam scans a wheel at a height of $y = 0$.

[Fig. 7] Fig. 7 is a graph illustrating change over time in the measured distance and measured speed of a moving body in an example.

[Fig. 8A] Fig. 8A is a diagram schematically illustrating an example of outputting vehicle detection and axle detection as pulse signals.

[Fig. 8B] Fig. 8B is a diagram schematically illustrating an example in which the vehicle detection and axle detection pulse signals in Fig. 8A are superimposed and outputted.

[Fig. 8C] Fig. 8C is a diagram schematically illustrating an example of outputting entry detection and wrong-way detection of a moving body as pulse signals.

[Fig. 9A] Fig. 9A is a front view schematically illustrating an example in which a moving body is irradiated by a plurality of light beams from above.

[Fig. 9B] Fig. 9B is a side view schematically illustrating an example in which a moving body is irradiated by a plurality of light beams from above.

[Fig. 10A] Fig. 10A is a front view schematically illustrating yet another example in which a moving body is irradiated by a plurality of light beams from the side.

[Fig. 10B] Fig. 10B is a front view schematically illustrating another example in which a moving body is irradiated by a plurality of light beams from above.

[Fig. 11] Fig. 11 is a flowchart illustrating an example of measurement operations executed by a processing circuit.

[Fig. 12] Fig. 12 is a flowchart illustrating another example of measurement operations executed by a processing circuit.

[Fig. 13A] Fig. 13A is a diagram schematically illustrating a first example of the installation of a measurement device in ETC.

[Fig. 13B] Fig. 13B is a diagram schematically illustrating a second example of the installation of a measurement device in ETC.

[Fig. 14] Fig. 14 is a diagram schematically illustrating the positional relationship of a belt conveyor, a plurality of corrugated boxes carried by the belt conveyor, and a measurement device.

Description of Embodiments

In the present disclosure, all or part of the circuits, units, devices, members, or sections, or all or part of the function blocks in the block diagrams, may also be executed by one or multiple electronic circuits, including a semiconductor device, a semiconductor integrated circuit (IC), or a large-scale integration (LSI) chip, for example. An LSI chip or IC may be integrated into a single chip, or may be configured by combining multiple chips. For example, function blocks other than memory elements may be integrated into a single chip. Although referred to as an LSI chip or IC herein, such electronic circuits may also be called a system LSI chip, a very large-scale integration (VLSI) chip, or an ultra-large-scale integration (ULSI) chip, depending on the degree of integration. A field-programmable gate array (FPGA) programmed after fabrication of the LSI chip, or a reconfigurable logic device in which interconnection relationships inside the LSI chip may be reconfigured or in which circuit demarcations inside the LSI chip may be set up, may also be used for the same purpose.

Furthermore, the function or operation of all or part of a circuit, unit, device, member, or section may also be executed by software processing. In this case, the software is recorded onto a non-transitory recording medium, such as one or multiple ROM modules, optical discs, or hard disk drives, and when the software is executed by a processor, the function specified by the software is executed by the processor and peripheral devices. A system or device may also be provided with one or multiple non-transitory recording media on which the software is recorded, a processor, and necessary hardware devices, such as an interface, for example.

In the present disclosure, "light" means electromagnetic waves, including not only visible light (with a wavelength from approximately 400 nm to approximately 700 nm), but also ultraviolet rays (with a wavelength from approximately 10 nm to approximately 400 nm) and infrared rays (with a wavelength from approximately 700 nm to approximately 1 mm). In this specification, ultraviolet rays and infrared rays may also be referred to as "ultraviolet light" and "infrared light", respectively.

The following describes exemplary embodiments of the present disclosure. Note that the embodiments described hereinafter all illustrate general or specific examples. Features such as numerical values, shapes, structural elements, placement and connection states of structural elements, steps, and the ordering of steps indicated in the following embodiments are merely examples, and are not intended to limit the present disclosure. In addition, among the structural elements in the following embodiments, structural elements that are not described in the independent claim indicating the broadest concept are described as arbitrary or optional structural elements. Also, each diagram is a schematic diagram, and does not necessarily illustrate a strict representation. Furthermore, in the drawings, structural elements that are substantially the same are denoted with the same signs, and duplicate description of such structural elements may be reduced or omitted in some cases.

First, the underlying knowledge forming the basis of the present disclosure will be described.

The information that a conventional optical vehicle detector acquires alone is the presence or absence of a vehicle passing through at a certain height and the passing time of the vehicle at the certain height. Thus, to measure the length of the vehicle, count the number of axles, and detect gaps between vehicles, a plurality of vehicle detectors are installed depending on the purpose. Furthermore, in a vehicle detector of the opposing type, an enclosure that emits light and an enclosure that receives the light are installed with one enclosure on either side of the lane, and vehicles passing between the two enclosures are detected. With a vehicle detector of the opposing type, in addition to the increase in the number of enclosures, roadwork is performed to electrically connect the two enclosures.

In the device disclosed in PTL 1, since ToF technology is used, the device can be installed on only one of the sides of the lane, and the roadwork described above can be avoided. However, measuring the length of a vehicle requires the installation of multiple devices.

In the device disclosed in PTL 2, three-dimensional data about a vehicle is acquired by a plurality of detectors, and a histogram for the height of the vehicle is created from the three-dimensional data. With this device, axles can be detected on the basis of the histogram. However, measuring the length and speed of a vehicle requires data acquired by a plurality of devices.

A measurement device according to an embodiment of the present disclosure can generate a plurality of attribute data pertaining to a moving body with a simple device configuration by using what is referred to as frequency-modulated continuous-wave light detecting and ranging (FMCW-LiDAR). The following describes a measurement device according to an embodiment of the present disclosure and a program to be used in the measurement device.

A measurement device according to a first item includes: a light source which emits laser light to irradiate a moving body and which can vary the frequency of the laser light; an interference optical system that separates the laser light into reference light and output light, and generates interference light by interfering the reference light with at least one reflected light beam generated when at least one light beam obtained from the output light is reflected by the moving body; a light detector that detects the interference light; and a processing circuit that processes a signal outputted from the light detector. The processing circuit generates and outputs a plurality of attribute data pertaining to the moving body on the basis of measurement data on the moving body obtained by processing the signal.

With this measurement device, a plurality of attribute data pertaining to the moving body can be generated.

A measurement device according to a second item is such that, in the measurement device according to the first item, the plurality of attribute data includes at least one piece of information selected from the group consisting of the passing through of the moving body, the size of the moving body, the number of axles on the moving body, the traveling speed of the moving body, the movement direction of the moving body, and the type of the moving body.

With this measurement device, in the case in which the moving body is a vehicle, the class of vehicle traveling in an ETC lane can be ascertained from the above plurality of attribute data.

A measurement device according to a third item is such that, in the measurement device according to the first or second item, the plurality of attribute data is outputted as at least one pulse signal.

With this measurement device, a plurality of attribute data can be obtained from at least one pulse signal.

A measurement device according to a fourth item is such that, in the measurement device according to the third item, the at least one pulse signal includes a plurality of pulse signals. The measurement device is provided with a plurality of output ports from which to output each of the plurality of pulse signals.

With this measurement device, a plurality of pulse signals can be obtained respectively from a plurality of output ports.

A measurement device according to a fifth item is such that, in the measurement device according to the fourth item, the plurality of pulse signals are outputted synchronously.

This measurement device allows for alignment of the times of a plurality of attribute data obtained respectively from a plurality of pulse signals.

A measurement device according to a sixth item is such that, in the measurement device according to the third item, the at least one pulse signal is a single pulse signal. The plurality of attribute data is superimposed onto the single pulse signal and outputted.

With this measurement device, a plurality of attribute data can be obtained from a single pulse signal.

A measurement device according to a seventh item is such that, in the measurement device according to any of the first to sixth items, the emission direction of the at least one light beam is oblique to the direction of travel of the moving body.

With this measurement device, the speed of a moving body can be measured.

A measurement device according to an eighth item is such that, in the measurement device according to any of the first to seventh items, the at least one light beam includes a plurality of light beams. The at least one reflected light beam includes a plurality of reflected light beams equal in number to the plurality of light beams. The measurement device is further provided with an optical splitter which includes a plurality of emission ports and which splits the output light to emit light from each of the plurality of emission ports. Each of the plurality of light beams corresponds to the light emitted from one of the plurality of emission ports included in the optical splitter.

With this measurement device, a plurality of light beams can be obtained from the output light.

A measurement device according to a ninth item is such that, in the measurement device according to the eighth item, the moving body may be irradiated from the side by the plurality of light beams.

A measurement device according to a 10th item is such that, in the measurement device according to the ninth item, the plurality of light beams are emitted from different heights relative to the surface on which the moving body is located.

With this measurement device, the length and height of a moving body can be estimated by detecting a reflected light beam in each of channels from which a light beam is emitted.

A measurement device according to an 11th item is such that, in the measurement device according to the 10th item, the plurality of light beams are parallel to the surface.

In this measurement device, the height, relative to the road surface, of an irradiated spot where the moving body is irradiated by a light beam is equal to the height, relative to the road surface, of the channel from which the light beam is emitted.

A measurement device according to a 12th item is such that, in the measurement device according to the 10th item, the moving body includes a wheel. One or more light beams from among the plurality of light beams are emitted toward the wheel.

With this measurement device, the rotational speed of a wheel can be measured.

A measurement device according to a 13th item is such that, in the measurement device according to the 12th item, the one or more light beams from among the plurality of light beams are non-parallel to the surface, and the remaining light beams are parallel to the surface.

With this measurement device, the rotational speed of the wheels and the traveling speed of the vehicle body of a moving body can be measured more accurately.

A measurement device according to a 14th item is such that, in the measurement device according to the eighth item, the moving body may be irradiated from above by the plurality of light beams.

A measurement device according to a 15th item is such that, in the measurement device according to the 14th item, the plurality of light beams are parallel to a plane perpendicular to the surface on which the moving body is located and parallel to the direction of travel of the moving body.

With this measurement device, the length and height, relative to the road surface, of a moving body can be measured accurately.

A measurement device according to a 16th item includes: a light source which emits laser light to irradiate a moving body on a road surface and which can vary the frequency of the laser light; an interference optical system that separates the laser light into reference light and output light, and generates interference light by interfering the reference light with a plurality of reflected light beams generated when a plurality of light beams obtained from the output light are each reflected by the moving body; an optical splitter which includes a plurality of emission ports and which splits the output light to emit the plurality of light beams respectively from the plurality of emission ports; a light detector that detects the interference light; and a processing circuit that processes a signal outputted from the light detector. The processing circuit generates and outputs data pertaining to at least one of the length, the height relative to the road surface, or the speed of the moving body on the basis of the signal outputted from the light detector.

With this measurement device, by radiating a plurality of light beams, data pertaining to at least one of the length, the height relative to the road surface, or the speed of a moving body can be generated more accurately.

A computer program according to a 17th item is executed by a computer in a system that includes a measurement device. The measurement device includes: a light source which emits laser light to irradiate a moving body and which can vary the frequency of the laser light; an interference optical system that separates the laser light into reference light and output light, and generates interference light by interfering the reference light with at least one reflected light beam generated when at least one light beam obtained from the output light is reflected by the moving body; a light detector that detects the interference light; and a processing circuit that processes a signal outputted from the light detector. The computer program causes the computer to generate and output a plurality of attribute data pertaining to the moving body on the basis of measurement data on the moving body obtained by processing the signal.

With this computer program, a plurality of attribute data pertaining to the moving body can be generated.

(Embodiment)

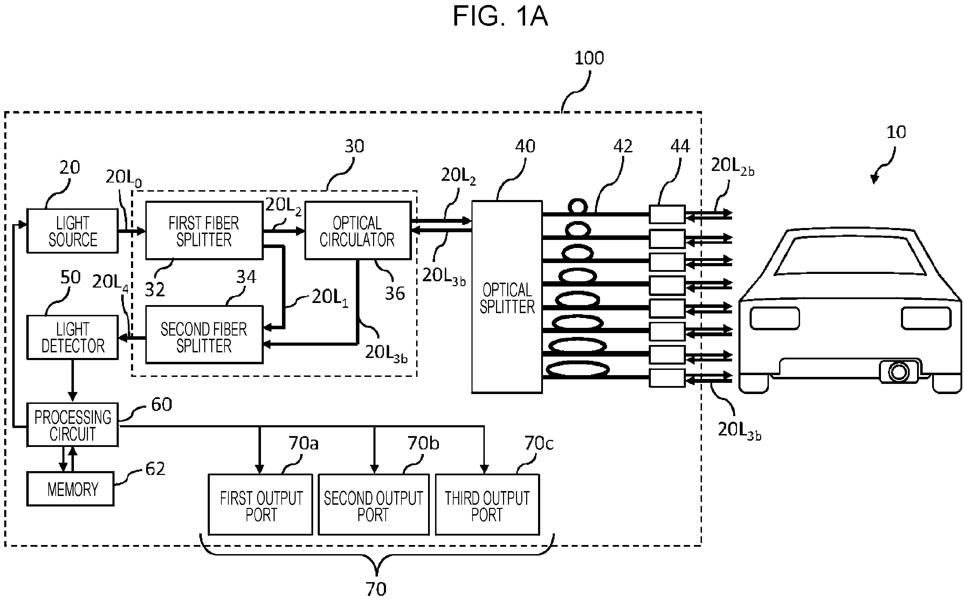

First, Fig. 1A will be referenced to describe an example configuration of a measurement device according to an embodiment of the present disclosure. In the measurement device, a plurality of light beams emitted from a single enclosure can be used to generate a plurality of attribute data pertaining to a moving body. Fig. 1A is a block diagram schematically illustrating a configuration of a measurement device 100 according to an exemplary embodiment of the present disclosure. Fig. 1A illustrates the rear portion of a moving body 10 to be measured. In the example illustrated in Fig. 1A, the moving body 10 is a standard-sized automobile with four wheels, but may also be a large-sized truck with four or more wheels, or a motorcycle with two wheels. The moving body 10 is located on a road surface. The measurement device 100 illustrated in Fig. 1A is provided with a light source 20, an interference optical system 30, an optical splitter 40, a plurality of optical fibers 42, a plurality of collimating lenses 44, a light detector 50, a processing circuit 60, a memory 62, and a plurality of output ports 70. The plurality of output ports 70 include a first output port 70a, a second output port 70b, and a third output port 70c. The measurement device 100 is further provided with a single enclosure, not illustrated, that houses these components. The thick arrows illustrated in Fig. 1A represent the flow of light. The thin arrows illustrated in Fig. 1A represent the transmission and reception of signals. The measurement device 100 may be installed beside a lane in which the moving body 10 travels, for example. In the example illustrated in Fig. 1A, the measurement device 100 is located on the left side of the moving body 10 from the perspective of the driver, but may also be located on the right side.

The light source 20 emits laser light $20L_0$, the frequency of which can be varied. The frequency may be modulated on a fixed time period, as in a triangular or sawtooth wave, for example. The time period may also vary. The frequency modulation period may be equal to or greater than 0.1 $\mu$s and less than or equal to 10 ms, for example. The frequency modulation amplitude may be equal to or greater than 100 MHz and less than or equal to 10 THz, for example. The wavelength of the laser light may be included in the near-infrared wavelength region equal to or greater than 800 nm and less than or equal to 2000 nm, for example. If near-infrared light is used as the laser light $20L_0$, sensing can be performed using light that is invisible to the human eye. Alternatively, the wavelength of the laser light $20L_0$ may be included in the visible light wavelength region equal to or greater than 400 nm and less than or equal to 800 nm, or included in the ultraviolet wavelength region.

The interference optical system 30 includes a first fiber splitter 32, a second fiber splitter 34, and an optical circulator 36. The first fiber splitter 32 separates the laser light $20L_0$ emitted from the light source 20 into reference light $20L_1$ and output light $20L_2$. The first fiber splitter 32 inputs the reference light $20L_1$ into the second fiber splitter 34 and inputs the output light $20L_2$ into the optical circulator 36.

In the case of splitting the output light $20L_2$ into a plurality of light beams $20L_{2b}$, the optical circulator 36 may input the output light $20L_2$ into the optical splitter 40. The output light $20L_2$ passes through the optical splitter 40 and is sequentially emitted toward the moving body 10 as the plurality of light beams $20L_{2b}$. A plurality of reflected light beams $20L_{3b}$ are each generated due to the moving body 10 being irradiated by the plurality of light beams $20L_{2b}$. The optical circulator 36 sequentially inputs into the second fiber splitter 34 a plurality of reflected light beams $20L_{3b}$ that have passed through the optical splitter 40 and returned. The second fiber splitter 34 inputs into the light detector 50 interference light $20L_4$, which is obtained by superimposing and interfering each of the plurality of reflected light beams $20L_{3b}$ with the reference light $20L_1$.

The optical splitter 40 includes a plurality of emission ports and splits the output light $20L_2$ to emit light from each of the plurality of emission ports. A plurality of optical fibers 42 of different lengths are connected to the plurality of emission ports of the optical splitter 40. The thick, ring-shaped lines illustrated in Fig. 1A represent wound portions of the optical fibers. The plurality of collimating lenses 44 are attached respectively to the plurality of optical fibers 42. Each collimating lenses 44 collimates and emits light propagating through the corresponding optical fiber 42. In this specification, to "collimate" means not only to make light parallel in a strict sense, but also to reduce the spread of a light beam. In this way, the plurality of light beams $20L_{2b}$ are emitted respectively from the plurality of collimating lenses 44. Each of the plurality of light beams $20L_{2b}$ corresponds to the light emitted from one of the plurality of emission ports included in the optical splitter 40. The plurality of light beams $20L_{2b}$ may be parallel to the road surface, for example. In this specification, "A is parallel to B" means not only the case in which A is parallel to B in a strict sense, but also cases in which the angle between A and B is equal to or greater than 0° and less than or equal to 5°.

The plurality of optical fibers 42 are set at different heights relative to the road surface. In the example illustrated in Fig. 1A, the lengths of the plurality of optical fibers become shorter as the height relative to the road surface increases. In another example, the lengths of the plurality of optical fibers may become longer as the height relative to the road surface increases, or the lengths of the plurality of optical fibers may be irregular with respect to the height relative to the road surface. The longer an optical fiber 42 is, the later is the timing at which a light beam $20L_{2b}$ is emitted from a collimating lens 44. Consequently, the plurality of light beams $20L_{2b}$ are emitted toward the moving body 10 sequentially at different timings.

The measurement device 100 includes a plurality of channels that respectively emit the plurality of light beams $20L_{2b}$, and the plurality of channels may be arranged in a column in the direction perpendicular to the road surface. In this specification, "A is perpendicular to B" means not only the case in which A is perpendicular to B in a strict sense, but also cases in which the angle between A and B is equal to or greater than 85° and less than or equal to 90°. In the example illustrated in Fig. 1A, the plurality of light beams $20L_{2b}$ are emitted in descending order of the height of the plurality of channels relative to the road surface. In the case in which the light beams $20L_{2b}$ are parallel to the road surface, the height, relative to the road surface, of an irradiated spot where the moving body 10 is irradiated by a light beam $20L_{2b}$ is equal to the height, relative to the road surface, of the channel from which the light beam $20L_{2b}$ is emitted. The plurality of reflected light beams $20L_{3b}$ respectively return to the plurality of optical fibers 42 from which the plurality of reflected light beams $20L_{3b}$ were emitted and are sequentially inputted, together with the reference light $20L_1$, into the light detector 50 at different timings via the optical splitter 40, the optical circulator 36, and the second fiber splitter 34. From the differences in the input timings, it is ascertained which reflected light beam $20L_{3b}$ corresponds to which channel.

The light detector 50 detects the interference light $20L_4$. The light detector 50 includes at least one light sensor. The light sensor outputs a signal corresponding to the strength of the detected light.

In the measurement device 100, the following two optical paths overlap. On one optical path, the output light $20L_2$ passes through the interference optical system 30 and the optical splitter 40, and arrives at the moving body 10 as the plurality of light beams $20L_{2b}$. On the other optical path, the reflected light beams $20L_3$ arrive at the interference optical system 30 from the moving body 10. By employing a coaxial optical system with overlapping optical paths, the configuration of the measurement device 100 can be simplified and consistent measurement can be achieved. Note that the optical system may also be designed to have non-overlapping optical paths.

The processing circuit 60 controls operations by the light source 20 and the light detector 50. The processing circuit 60 uses FMCW-LiDAR technology to process a signal outputted from the light detector 50. Through signal processing, the processing circuit 60 generates and outputs measurement data pertaining to at least one of the distance and speed of the moving body 10 in a contactless manner. Additionally, the processing circuit 60 generates a plurality of attribute data respectively indicating a plurality of attribute information pertaining to the moving body 10 on the basis of the measurement data on the distance and/or speed of the moving body 10, and outputs the generated plurality of attribute data from at least one of the plurality of output ports 70. The attribute data includes at least one piece of information selected from the group consisting of the passing through of the moving body 10, the size of the moving body 10, the number of axles on the moving body 10, the traveling speed of the moving body 10, the movement direction of the moving body 10, and the type of the moving body 10. A method of generating the plurality of attribute data pertaining to the moving body 10 is described later.

A computer program to be executed by the processing circuit 60 is stored in the memory 62, such as ROM or random access memory (RAM). In this way, the measurement device 100 is provided with a processing device that includes the processing circuit 60 and the memory 62. The processing circuit 60 and the memory 62 may be integrated onto a single circuit board or provided on separate circuit boards. The functions of the processing circuit 60 may also be distributed among a plurality of circuits. The processing device may also be installed in a remote location distant from another component and control operations by the light source 20 and the light detector 50 over a wired or wireless communication network.

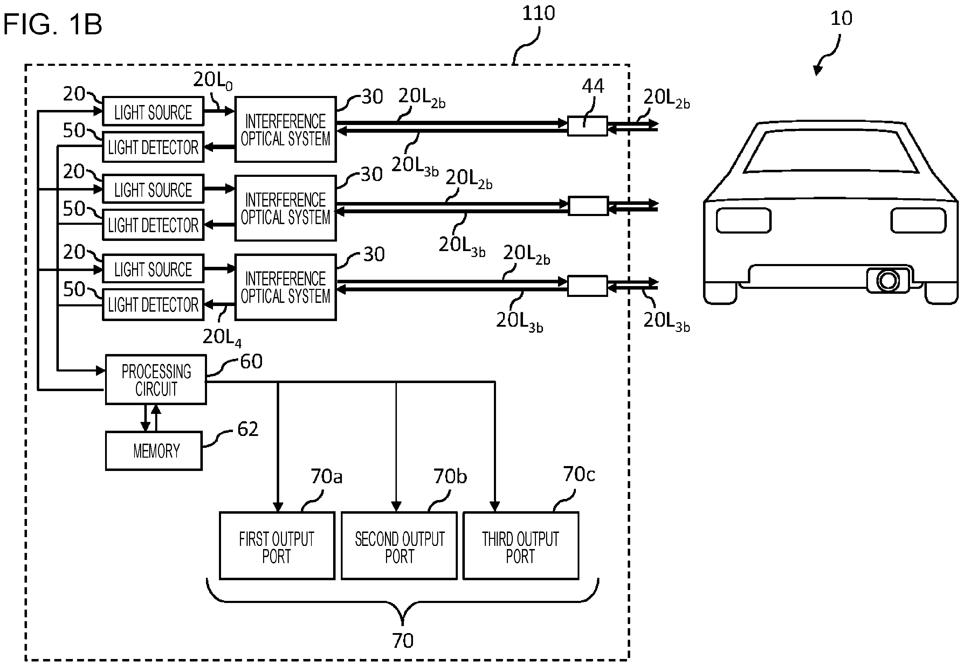

The plurality of output ports 70 may be mounted at different points on an enclosure, for example. Among the plurality of output ports 70, for example, the first output port 70a outputs measurement data on the distance and/or speed of the moving body 10, whereas the second output port 70b and the third output port 70c output different attribute data 1 and 2, respectively. In the case in which the measurement data and the output data are outputted as pulse signals, the plurality of output ports 70 respectively output a plurality of pulse signals. The number of output ports 70 is unrestricted and may be determined according to the number of pieces of data to be outputted. The configuration that emits the plurality of light beams $20L_{2b}$ from a single enclosure is not limited to the measurement device 100 illustrated in Fig. 1A. Fig. 1B will be referenced to describe a modification of the measurement device 100 according to the present embodiment. Fig. 1B is a block diagram schematically illustrating a configuration of a measurement device 110 according to the modification of the present embodiment. The measurement device 110 illustrated in Fig. 1B differs from the measurement device 100 illustrated in Fig. 1A in that the measurement device 110 includes a plurality of light sources 20, a plurality of interference optical systems 30, and a plurality of light detectors 50. A portion of the laser light $20L_0$ emitted from a given light source 20 is emitted as a light beam $20L_{2b}$ through the corresponding interference optical system 30. The remaining portion of the laser light $20L_0$ which serves as reference light is combined with a reflected light beam $20L_{3b}$ to form interference light $20L_4$, which is outputted from the same interference optical system 30 and detected by the corresponding light detector 50.

In the measurement device 110, a single processing circuit 60 controls operations by the plurality of light sources 20 and the plurality of light detectors 50. Since there is one processing circuit 60, a plurality of signals outputted respectively from the plurality of light detectors 50 can be processed quickly and a plurality of attribute data can be outputted quickly.

Note that in the present embodiment, a single light beam $20L_{2b}$ rather than a plurality may be emitted from a single enclosure. In this case, the measurement device 100 does not need to include the optical splitter 40, the plurality of optical fibers 42, and the plurality of collimating lenses 44 illustrated in Fig. 1. The output light $20L_2$ may be emitted as a single light beam $20L_{2b}$ from the optical circulator 36, through a single collimating lens 44, and toward the moving body 10. An optical fiber 42 may also be provided between the optical circulator 36 and the collimating lens 44.

In this specification, "at least one light beam $20L_{2b}$ obtained from the output light $20L_2$" means a single light beam $L_{2b}$ corresponding to the output light $20L_2$, or a plurality of light beams $20L_{2b}$ obtained from the output light $20L_2$ passing through the optical splitter 40.

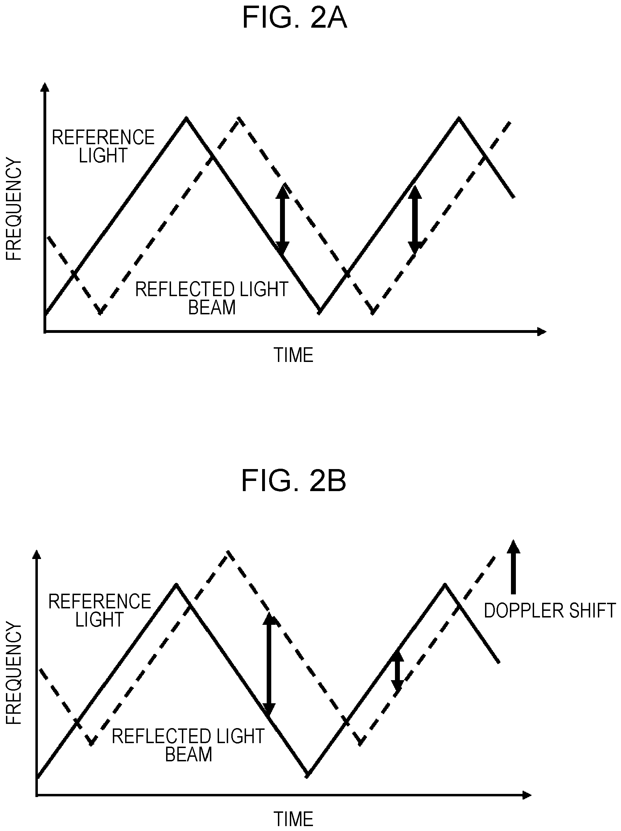

Next, Figs. 2A and 2B will be referenced to briefly describe FMCW-LiDAR technology. FMCW-LiDAR technology makes it possible to achieve a measurement device that can measure the speed of a moving body with high vibration resistance, a wide dynamic range with respect to distance, and high spatial resolution. Details regarding FMCW-LiDAR technology are disclosed in NPL 1, for example.

Fig. 2A is a diagram schematically illustrating change over time in the frequency of the reference light $20L_1$ and a reflected light beam $20L_{3b}$ in the case where the moving body 10 is stationary. The solid line represents the reference light, and the dashed line represents the reflected light beam. The frequency of the reference light $20L_1$ illustrated in Fig. 2A repeats a triangular-wave change over time. That is, the frequency of the reference light $20L_1$ increases linearly, and thereafter decreases linearly by an amount equal to the increase in one period. In comparison with the frequency of the reference light $20L_1$, the frequency of the reflected light beam $20L_{3b}$ is shifted in the positive direction on the time axis by the amount of time it takes for the output light $20L_2$ to be emitted from the measurement device 100, reflected by the moving body 10, and return as the reflected light beam $20L_{3b}$. As a result, the interference light $20L_4$ obtained by superimposing and interfering the reference light $20L_1$ with the reflected light beam $20L_{3b}$ has a frequency corresponding to the difference between the frequency of the reflected light beam $20L_{3b}$ and the frequency of the reference light $20L_1$. The double-headed arrows illustrated in Fig. 2A indicate the difference between the frequencies. The light detector 50 outputs a signal indicating the intensity of the interference light $20L_4$. This signal is called the beat signal. The frequency of the beat signal, or in other words the beat frequency, is equal to the frequency difference above. From the beat frequency, the processing circuit 60 can generate data pertaining to the distance from the measurement device 100 to the moving body 10.

Fig. 2B is a diagram schematically illustrating change over time in the frequency of the reference light $20L_1$ and a reflected light beam $20L_{3b}$ in the case where the moving body 10 approaches the measurement device 100. When the moving body 10 approaches, Doppler shift causes the frequency of the reflected light beam $20L_{3b}$ to shift in the positive direction on the frequency axis compared to the case in which the moving body 10 is stationary. The amount by which the frequency of the reflected light beam $20L_{3b}$ shifts depends on the projected component of the speed vector at a certain portion of the moving body 10 in the direction of the reflected light beam $20L_{3b}$. The beat frequency is different between the case in which the frequencies of the reference light $20L_1$ and the reflected light beam $20L_{3b}$ increase linearly and the case in which the frequencies decrease linearly. In the example illustrated in Fig. 2B, the beat frequency for the case in which the frequencies decrease linearly is higher than the beat frequency for the case in which the frequencies increase linearly. From this difference in the beat frequency, the processing circuit 60 can generate data pertaining to the speed of the moving body 10. Additionally, from the average of two different beat frequencies, the processing circuit 60 can generate data pertaining to the distance of the moving body 10.

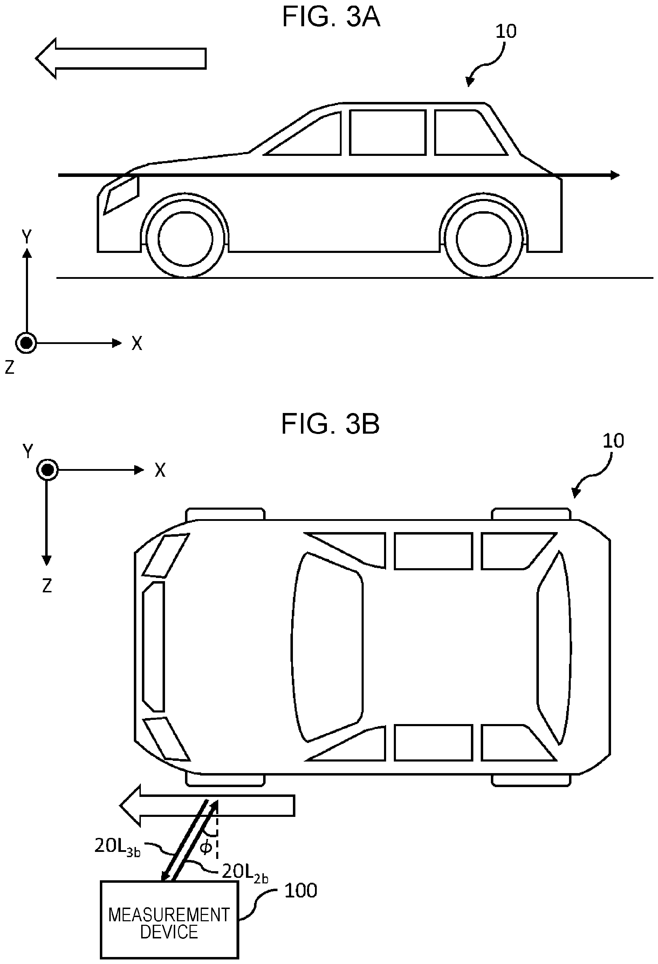

Next, Figs. 3A to 3C will be referenced to describe how the moving body 10 in travel is irradiated by the light beams $20L_{2b}$. To facilitate understanding of the explanation, mutually orthogonal axes X, Y, and Z are illustrated in Figs. 3A to 3C. However, these axes do not limit the directions in which the moving body 10 and the measurement device 100 face, and the moving body 10 and measurement device 100 may face in any direction. The +X direction is the direction of the X-axis arrow, and the -X direction is the opposite direction. The same applies to the $\pm$Y directions and the $\pm$Z directions.

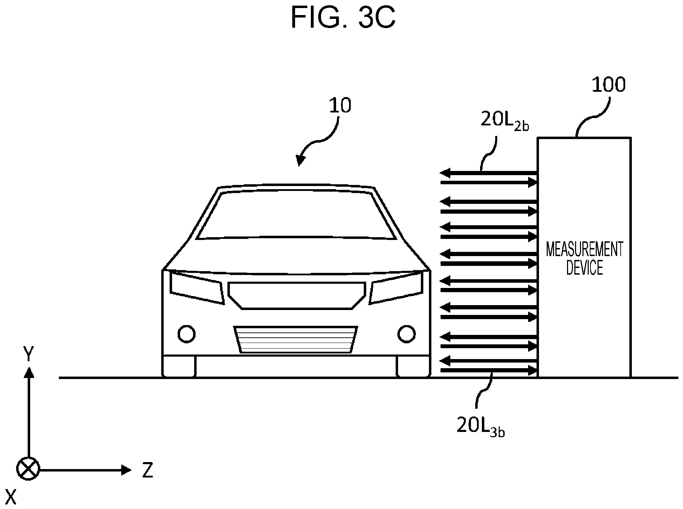

Fig. 3A is a side view schematically illustrating an example in which the moving body 10 is scanned by one of a plurality of light beams $20L_{2b}$. Figs. 3B and 3C are a top view and a front view, respectively, that schematically illustrate an example in which the moving body 10 is irradiated by a plurality of light beams $20L_{2b}$ from the side. In Fig. 3B, the plurality of light beams $20L_{2b}$ overlap one another and are illustrated as a single light beam $20L_{2b}$. The same applies to the reflected light beams $20L_{3b}$. In the example illustrated in Figs. 3B and 3C, the side surface of the moving body 10 is irradiated by the plurality of light beams $20L_{2b}$. The side surface of the moving body 10 refers to the portion of the moving body 10 that is visible when viewed from the +Z direction or the -Z direction, or in other words, in a side view.

As illustrated in Figs. 3A to 3C, the +X direction is the direction opposite to the traveling direction of the moving body 10, and is parallel to the road surface on which the moving body 10 travels. The +Y direction is the direction perpendicular to the road surface and going away from the road surface. The +Z direction is the direction perpendicular to the traveling direction of the moving body 10 and parallel to the road surface, and the direction going from the moving body 10 to the measurement device 100 when the moving body 10 and the measurement device 100 are opposite each other. The XZ plane is parallel to the road surface, the YZ plane is perpendicular to the traveling direction of the moving body 10, and the XY plane is perpendicular to the road surface and parallel to the 10 traveling direction of the moving body.

The white arrows illustrated in Figs. 3A and 3B represent the traveling direction of the moving body 10. The thick arrow illustrated in Fig. 3A represents the position and direction in which the moving body 10 in travel is scanned by one of the plurality of light beams $20L_{2b}$. Among the thick arrows illustrated in Figs. 3B and 3C, the arrows pointing from the measurement device 100 to the moving body 10 represent the plurality of light beams $20L_{2b}$, while the arrows pointing from the moving body 10 to the measurement device 100 represent the plurality of reflected light beams $20L_{3b}$. The angle $\varphi$ illustrated in Fig. 3B denotes the angle between each of the plurality of light beams $20L_{2b}$ and the YZ plane. The angle $\varphi$ may have not only a positive value but also a negative value. When the angle $\varphi$ is a positive value, the plurality of light beams $20L_{2b}$ are emitted toward the moving body 10 from obliquely ahead, whereas when the angle $\varphi$ is a negative value, the plurality of light beams $20L_{2b}$ are emitted toward the moving body 10 from obliquely behind. In the example illustrated in Fig. 3B, the absolute value of the angle $\varphi$ may be greater than 0° and less than or equal to 85°, for example. A more preferable absolute value of the angle $\varphi$ may be equal to or greater than 5° and less than or equal to 30°. The emission direction of the plurality of light beams $20L_{2b}$ is oblique to the traveling direction of the moving body 10. The plurality of light beams $20L_{2b}$ are parallel to the XZ plane. Furthermore, the plurality of light beams $20L_{2b}$ exist in the plane which is perpendicular to the XZ plane and which intersects the YZ plane at the angle $\varphi$. A plurality of channels in which the plurality of light beams $20L_{2b}$ are respectively emitted are arranged in a column in the direction perpendicular to the XZ plane.

Provided that V (m/h) is the absolute value of the traveling speed of the moving body 10, a traveling speed vector of the moving body 10 is $V_1 = (-V, 0, 0)$. On the other hand, a unit vector parallel to the direction of the reflected light beams $20L_{3b}$ is $N = (-\sin \varphi, 0, \cos \varphi)$. The speed measured by the measurement device 100 is the projected component of the speed vector at a certain portion of the moving body 10 in the direction of the reflected light beams $20L_{3b}$. In other words, the measured speed is obtained by taking the inner product of the speed vector at a certain portion of the moving body 10 and the unit vector N. The measured speed for the vehicle body of the moving body 10 is obtained by taking the inner product of the traveling speed vector $V_1$ and the above unit vector N, and is expressed by the following formula (1).

[Math. 1]

$$v_1 = V \sin \phi \qquad (1)$$

Since the angle $\varphi$ is known, when the angle $\varphi \neq 0°$, the traveling speed V of the moving body 10 can be calculated by dividing the measured speed $v_1$ by sin $\varphi$. When the emission angle of the light beams $20L_{2b}$ is $\varphi = 0°$, the measured speed $v_1$ is zero. This is because the traveling speed vector $V_1$ and the unit vector N are orthogonal. The length of the moving body 10 in each channel can be calculated by multiplying the time when the reflected light beams $20L_{3b}$ are detected in each channel by the traveling speed V of the moving body 10. Note that even when the emission angle of the light beams $20L_{2b}$ is $\varphi = 0°$, the height of the moving body 10 relative to the road surface can be estimated by checking which channels the reflected light beams $20L_{3b}$ were detected in from among the plurality of reflected light beams $20L_{3b}$.

When none of the plurality of light beams $20L_{2b}$ hit the moving body 10, the measured speed is zero in all channels, and the measured distance is longer than a prescribed distance. The prescribed distance is the distance at which the light beams $20L_{2b}$ pass through the lane and is W / cos $\varphi$, where W is the lateral width of the lane. When such a measured speed and measured distance are obtained, the processing circuit 60 determines that no moving body 10 is present in the lane.

Alternatively, in a configuration in which the measurement device 100 is installed on one side of the ETC lane in which the moving body 10 travels and a beam damper that absorbs the light beams $20L_{2b}$ is installed on the other side, the absence of the moving body 10 in the lane can be determined as follows. When none of the plurality of light beams $20L_{2b}$ hit the moving body 10, the reflected light beams $20L_{3b}$ do not return. When the reflected light beams $20L_{3b}$ are not detected in any of the channels, the processing circuit 60 determines that no moving body 10 is present in the lane. The beam damper prevents the generation of unintended reflected light beams $20L_{3b}$, and thus can reduce false positives and adverse influence on another detector due to diffuse reflections.

The installation of the beam damper does not require wiring or precise alignment of the beam damper and the measurement device 100. When there are a plurality of ETC lanes and the front surface of the measurement device 100 installed beside a certain ETC lane faces the back surface of the measurement device 100 installed beside an adjacent ETC lane, the back surface may function as the beam damper.

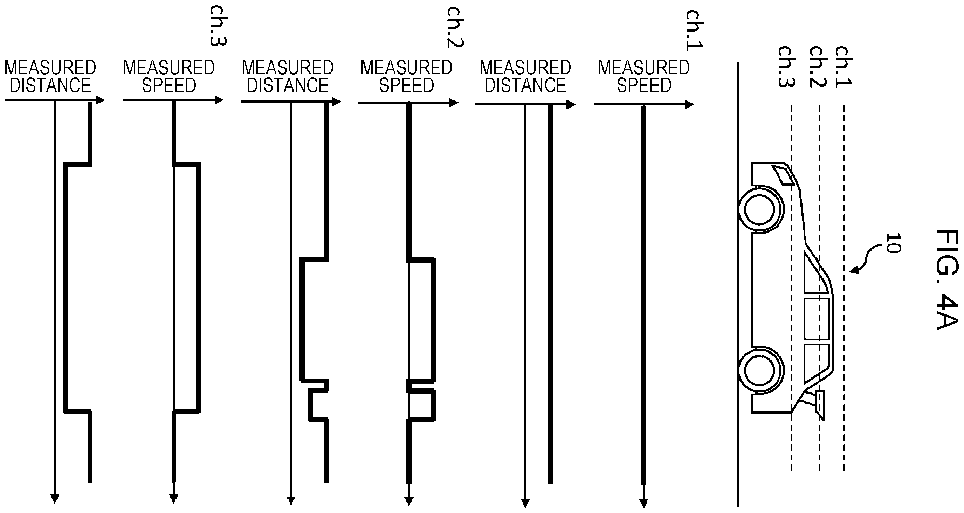

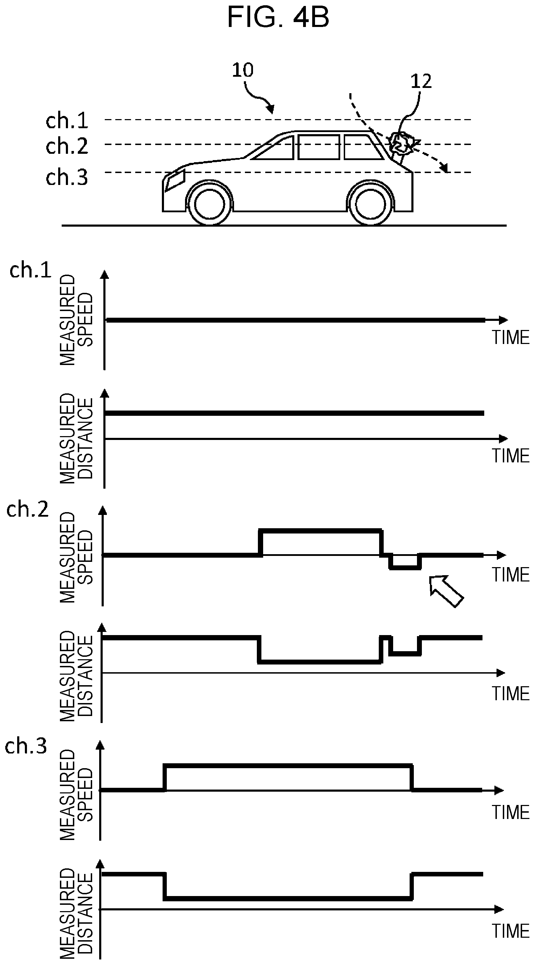

Next, Figs. 4A and 4B will be referenced to describe examples of change over time in measured speed and measured distance in the case of emitting a plurality of beams. Figs. 4A and 4B are diagrams schematically illustrating examples of change over time in measured speed and measured distance in three channels at different heights. Figs. 4A and 4B illustrate a moving body 10 with a wing attached to the rear section. The illustration of the moving body 10 clarifies the relationship between the change over time in measured speed and measured distance and the scanning position of the moving body 10 by the plurality of light beams $20L_{2b}$. The example illustrated in Fig. 4B differs from the example illustrated in Fig. 4A in that an obstacle 12, such as a piece of paper flying through the air, overlaps the wing of the moving body 10 when viewing the moving body 10 from the side. The three channels are numbered ch. 1, ch. 2, ch. 3 in descending order of height relative to the road surface.

In the example illustrated in Fig. 4A, ch. 1 is positioned higher than the moving body 10, and the light beam $20L_{2b}$ emitted from ch. 1 does not hit the moving body 10. Consequently, in a configuration not provided with a beam damper, the measured speed is zero and the measured distance is longer than the prescribed distance. On the other hand, ch. 2 is positioned at a height near the center of the windshield and the wing of the moving body 10, while ch. 3 is positioned at a height near the upper part of the bumpers of the moving body 10. Consequently, in ch. 2 and ch. 3, at times when the moving body 10 is irradiated by the light beams $20L_{2b}$, the measured speed is equal to the measured speed $v_1$ expressed by formula (1) and the measured distance is equal to the distance between the measurement device 100 and the moving body 10 in the direction of the light beams $20L_{2b}$ illustrated in Fig. 3B. In ch. 2, the gap between the wing and the back glass positioned in front of the wing is reflected, with the measured speed going to zero and the measured distance becoming longer than the prescribed distance partway through. In ch. 3, the irradiation time is longer than in ch. 2. In the case in which the plurality of light beams $20L_{2b}$ are parallel to the road surface, which of the plurality of channels the moving body 10 has passed in front of can be known easily.

The maximum length of the moving body 10 obtained from ch. 1, ch. 2, and ch. 3 can be used as an estimate of the length of the moving body 10, or in other words the vehicle length. Furthermore, the results in ch. 1 and ch. 2 demonstrate that the height of the moving body 10 relative to the road surface, or in other words the vehicle height, is equal to or greater than the height of ch. 2 relative to the road surface and less than the height of ch. 1 relative to the road surface. In this case, the average of these heights can be used as an estimate of the vehicle height. By increasing the number of channels and making the interval between adjacent channels narrower, the vehicle length and vehicle height can be estimated more accurately.

In the example illustrated in Fig. 4B, the obstacle 12 is falling from the front toward the rear of the moving body, as indicated by the dashed arrow. In this case, the projected component of the speed of the obstacle 12 in the direction of the reflected light beams $20L_{3b}$ is negative. Consequently, in ch. 2, at times when the obstacle 12 is irradiated by the light beams $20L_{2b}$, the measured speed is negative, as indicated by the white arrow illustrated in Fig. 4B. In this way, when the non-zero measured speed at one time largely differs from the non-zero measured speed at another time, the processing circuit 60 determines that some kind of anomaly has occurred. This determination may be made according to whether or not the difference between the non-zero measured speeds at two given times exceeds a reference value.

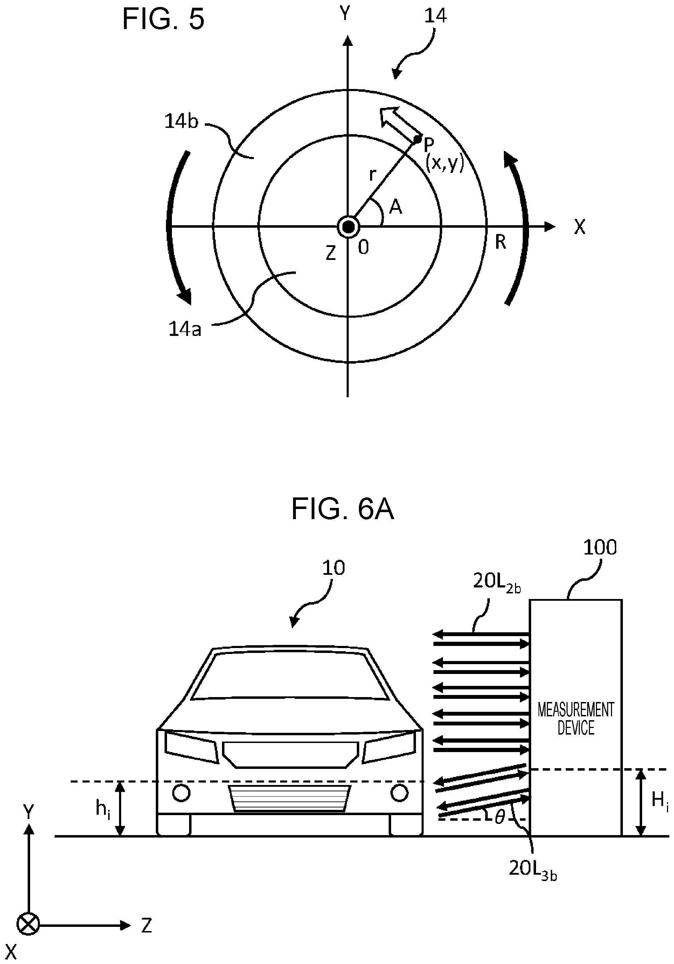

In the example above, the vehicle body of the moving body 10 is irradiated by the light beams $20L_{2b}$. Next, Fig. 5 will be referenced to describe an example in which a rotating wheel of the moving body 10 is irradiated by the light beams $20L_{2b}$. Fig. 5 is an enlarged view of a tire-wheel assembly 14 of the moving body 10, the wheel rotating counterclockwise. Of the tire-wheel assembly 14 illustrated in Fig. 5, the inner circle 14a represents a wheel and the outer ring 14b represents a tire. In the example illustrated in Fig. 5, R (m) denotes the maximum radius of the tire-wheel assembly 14, r (m) denotes the distance of a line from the center of the tire-wheel assembly 14 to a position P, and A denotes the angle of this line from the X axis. In an XY coordinate system with the origin set at the center of the tire-wheel assembly 14, the X and Y components of the position P are $x = r \times \cos A$ and $y = r \times \sin A$, respectively. The absolute value of the rotational speed of the tire-wheel assembly 14 at the position P is Vr/R, and the rotational speed vector is $(-\sin A \times Vr / R, \cos A \times Vr / R, 0) = (-(y / R)V, (x / R)V, 0)$. The speed vector for the rotating wheel is the combined speed vector of the traveling speed vector $V_1$ of the moving body 10 and the rotational speed vector, and is $V_2 = (-V - (y / R)V, (x / R)V, 0)$. The measured speed for the rotating wheel of the moving body 10 is obtained by taking the inner product of the speed vector $V_2$ and the unit vector $N = (-\sin \varphi, 0, \cos \varphi)$ which is parallel to the direction of the reflected light beams $20L_{3b}$, and is expressed by the following formula (2).

[Math. 2]

$$v_2 = V \frac{y}{R} \sin \phi + V \sin \phi \qquad (2)$$

The measured speed $v_2$ in formula (2) differs by $V(y / R)\sin \varphi$ from the measured speed $v_1$ in formula (1). When a light beam $20L_{2b}$ scans the wheel at a height of $y > 0$, the measured speed $v_2$ is higher than the measured speed $v_1$. When a light beam $20L_{2b}$ scans the wheel at a height of $y < 0$, the measured speed $v_2$ is lower than the measured speed $v_1$. In this cases, the difference between the measured speed for the rotating wheel and the measured speed for the vehicle body can be used to determine which position of the moving body 10 is the vehicle body and which is the rotating wheel. However, the difference between the measured speed for the rotating wheel and the measured speed for the vehicle body will be indistinct unless the $V(y / R)\sin \varphi$ component is large to a certain extent. When a light beam $20L_{2b}$ scans the wheel at a height of $y = 0$, the measured speed $v_2$ is equal to the measured speed $v_1$, with no difference between the two.

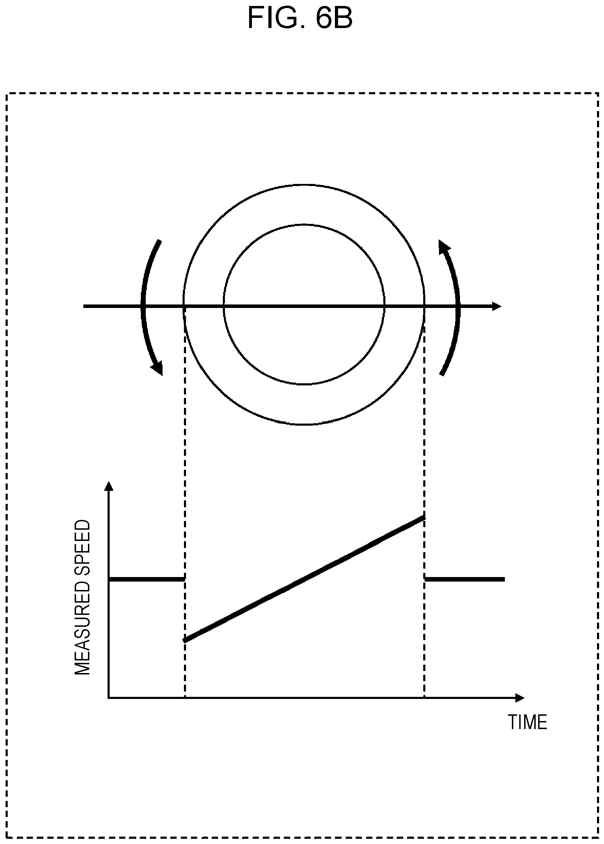

The following references Figs. 6A and 6B t describe a method for obtaining a more distinct difference between the measured speed for the rotating wheel and the measured speed for the vehicle body. Fig. 6A is a front view schematically illustrating another example in which the moving body 10 is irradiated by the plurality of light beams $20L_{2b}$ from the side. As illustrated in Fig. 6A, one or more light beams $20L_{2b}$ among the plurality of light beams $20L_{2b}$ are emitted toward the rotating wheel, and the one or more light beams $20L_{2b}$ are non-parallel to the XZ plane. The remaining light beams $20L_{2b}$ are emitted toward the vehicle body, and are parallel to the XZ plane. The angle $\theta$ illustrated in Fig. 6A denotes the angle between the one or more light beams $20L_{2b}$ and the XZ plane. The angle $\theta$ may have not only a positive value but also a negative value. When the angle $\theta$ is a positive value, the output light $20L_2$ is emitted toward the side of moving body 10 from obliquely above, whereas when the angle $\theta$ is a negative value, the output light $20L_2$ is emitted toward the side of the moving body 10 from obliquely below. When the angle $\theta$ has a large absolute value, the height at which the light beams $20L_{2b}$ scan the moving body 10 changes greatly depending on the traveling position of the moving body 10 in the lane. When the angle $\theta$ has a small absolute value, the height at which the output light $20L_2$ scans the moving body 10 can be adjusted easily. Such an absolute value of the angle $\theta$ may be equal to or greater than 0° and less than or equal to 15°, for example. The one or more light beams $20L_{2b}$ above intersect the YZ plane at the angle $\varphi$ as illustrated in Fig. 3B, similarly to the remaining light beams $20L_{2b}$.

In the example illustrated in Fig. 6A, the unit vector parallel to the direction of a reflected light beam $20L_{3b}$ returning from the rotating wheel is $N = (-\sin \varphi, \sin \theta, (1 - \sin^2 \varphi - \sin^2 \theta)^{1/2})$. The measured speed for the rotating wheel of the moving body 10 is obtained by taking the inner product of the speed vector $V_2$ above and the unit vector N, and is expressed by the following formula (3).

[Math. 3]

$$v_3 = V\left(\frac{x}{R}\sin\theta + \frac{y}{R}\sin\phi\right) + V\sin\phi \qquad (3)$$

The measured speed $v_3$ in formula (3) differs by $V(x\,/\,R)\sin\theta + V(y\,/\,R)\sin\varphi$ from the measured speed $v_1$ in formula (1). Due to the $V(x\,/\,R)\sin\theta$ component, the measured speed $v_3$ increases with time when a light beam $20L_{2b}$ scans the wheel at a certain height.

Fig. 6B is a diagram schematically illustrating the relationship between measured speed and time in a case where a light beam $20L_{2b}$ scans the wheel at a height of $y = 0$. Fig. 6B illustrates the wheel rotating counterclockwise. Portions other than the wheel are the vehicle body. As illustrated in Fig. 6B, at times when a light beam $20L_{2b}$ scans the vehicle body, the measured speed is constant and non-zero irrespective of time, whereas at times when a light beam $20L_{2b}$ scans the rotating wheel, the measured speed increases linearly with time. When a light beam $20L_{2b}$ scans the wheel at a height of $y > 0$, the linear change over time in the measured speed is shifted upward on the measured speed axis by $V(y\,/\,R)\sin\varphi$. When a light beam $20L_{2b}$ scans the wheel at a height of $y < 0$, the linear change over time in the measured speed is shifted downward on the measured speed axis by $V(y\,/\,R)\sin\varphi$.

As above, by making the light beams $20L_{2b}$ non-parallel to the XZ plane, a distinct difference between the measured speed for the rotating wheel and the measured speed for the vehicle body can be obtained. Consequently, from the measured speed, the processing circuit 60 can determine which position of the moving body 10 is the vehicle body and which is the rotating wheel. As a result, the traveling speed and length of the moving body 10 can be calculated from speed data for the vehicle body, excluding speed data arising from the rotating wheel. Furthermore, the number of rotating wheels can be counted from the speed data arising from the rotating wheel. Details regarding measured speed for a rotating wheel are disclosed in Japanese Patent Application No. 2021-040245.

As illustrated in Fig. 6A, when the light beams $20L_{2b}$ are emitted non-parallel to the XZ plane, the height $H_i$ of the i-th channel relative to the road surface is different from the height hi, relative to the road surface, of an irradiated spot where the moving body 10 is irradiated by a light beam $20L_{2b}$ emitted from the i-th channel. Provided that $L_i$ is the distance between the i-th channel and the irradiated spot, the height $h_i$ of the irradiated spot relative to the road surface is expressed by the following formula (4).

[Math. 4]

$$h_i = H_i - L_i \sin\theta \qquad (4)$$

According to formula (4), the height hi, relative to the road surface, of the irradiated position corresponding to the i-th channel can be ascertained. As above, when the moving body 10 is irradiated by the light beams $20L_{2b}$ from the side, the height of the irradiated position relative to the road surface can be ascertained even when the light beams $20L_{2b}$ are non-parallel to the XZ plane.

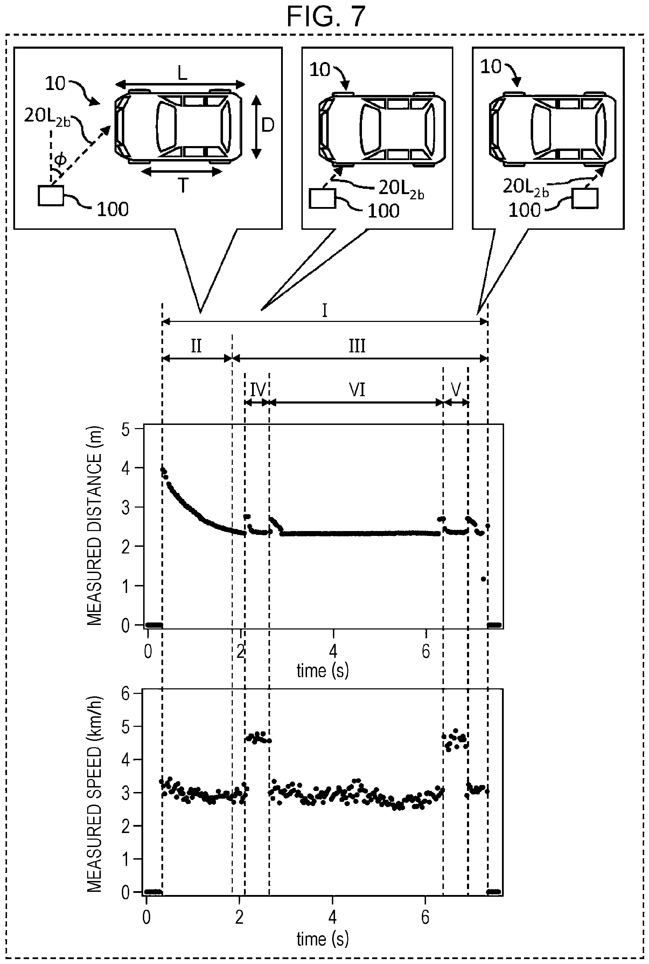

Next, Fig. 7 will be referenced to describe an example of using the measurement device 100 according to the present embodiment to measure the distance and speed of the moving body 10 in travel. In the example, the vehicle body and rotating wheels of the moving body 10 are irradiated by a single light beam $20L_{2b}$. The radiation direction of the light beam $20L_{2b}$ is parallel to the road surface and intersects the traveling direction of the moving body 10. Fig. 7 is a graph illustrating change over time in the measured distance and measured speed of the moving body 10 in the example. Fig. 7 illustrates the positional relationships among the measurement device 100, the moving body 10, and the light beam $20L_{2b}$. In the example illustrated in Fig. 7, no reflected light beam returns when the moving body 10 is not irradiated by the light beam $20L_{2b}$. In the following description, the periods in which the measured distance and measured speed exhibit characteristic behavior are divided into periods I to VI.

In period I, the moving body 10 is irradiated by the light beam $20L_{2b}$, and the measured distance and measured speed are non-zero. Within period I, the measured distance decreases over time in period II, whereas the measured distance stays substantially constant over time in period III. Period II is the period in which the front surface of the moving body 10 is irradiated by the light beam $20L_{2b}$ from the far side to the near side. Period III is the period in which the side surface of the moving body 10 is irradiated by the light beam $20L_{2b}$ from the front edge to the rear edge. From the measured distance, the irradiation period of the front surface or the side surface of the moving body 10 can be determined. Note that period II is omitted in the examples in Figs. 4A and 4B.

Within period I, the measured speed in period IV and period V is higher than the measured speed in the other periods. Although there are differences in the magnitude of the measured speed, the measured speed is substantially constant in periods IV and V, and in each of the other periods. Within period III, periods IV and V are the periods in which the wheels of the moving body 10 are irradiated by the light beam $20L_{2b}$, and period VI in between is the period in which the side surface of the portion of the vehicle body of the moving body 10 that is located between the two wheels is irradiated by the light beam $20L_{2b}$. From the measured speed, the irradiation periods of the vehicle body and the wheels of the moving body 10 can be determined.

Within period I, the measured speed in period IV and period V is higher than the measured speed in the other periods by an amount corresponding to the first term on the right side of formula (2). According to formula (1), the traveling speed V of the moving body 10 can be calculated from the measured speed in the periods other than periods IV and V.

From the measured distance data and measured speed data illustrated in Fig. 7, various attribute data pertaining to the moving body 10 can be acquired. From the time span $\Delta t_D$ in period II, the traveling speed V of the moving body 10, and the radiation angle $\varphi$ of the light beam $20L_{2b}$, the width of the moving body 10, that is, the vehicle width D = $V\Delta t_D$ / tan $\varphi$ can be calculated. From the time span $\Delta t_L$ in period III and the traveling speed V of the moving body 10, the vehicle length L = $V\Delta t_L$ can be calculated. From the time span $\Delta t_{T1}$ in period IV, the time span $\Delta t_{T2}$ in period V, the time span $\Delta t_{T3}$ in period VI, and the traveling speed of the moving body 10, the distance between the centers of the two wheels, that is, the wheel-to-wheel distance T = $V(\Delta t_{T1} / 2 + \Delta t_{T2} / 2 + \Delta t_{T3})$ can be calculated. From the difference between the measured speeds of the vehicle body and the rotating wheels, the number of rotating wheels can be counted.

In the example, a single light beam $20L_{2b}$ is emitted, but by emitting a plurality of light beams $20L_{2b}$, the vehicle height can be ascertained.

Furthermore, from the attribute data such as the vehicle length, vehicle width, vehicle height, number of rotating wheels, and wheel-to-wheel distance, a vehicle type classification for highways can be identified, such as light automobile or the like, standard-sized vehicle, medium-sized vehicle, large-sized vehicle, and extra-large-sized vehicle, for example.

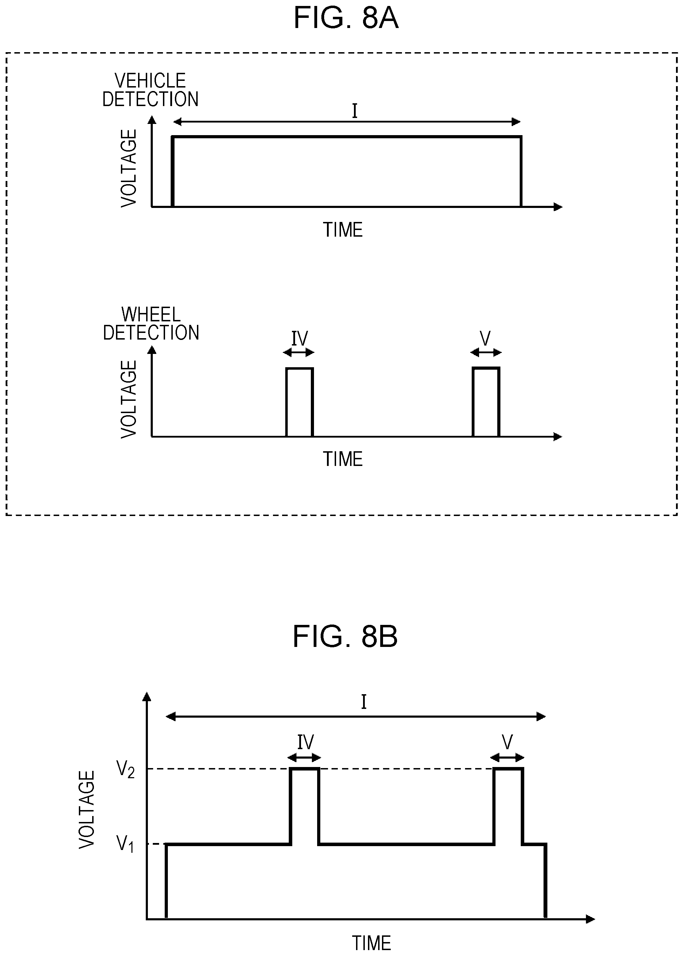

Next, Figs. 8A to 8C will be referenced to describe an example of outputting real-time information about the passing through of the moving body 10 as one or more pulse signals. Fig. 8A is a diagram schematically illustrating an example of outputting vehicle detection and axle detection as pulse signals. A pulse signal corresponding to period I, in which the measured distance and measured speed are non-zero, is outputted as a vehicle detection pulse signal. From the ending of period I, it is ascertained that the moving body 10 has passed through. Similarly, a pulse signal corresponding to periods IV and V, in which the measured speed rises relatively due to the rotating wheels, is outputted as an axle detection pulse signal. In the example illustrated in Fig. 8A, the vehicle detection and axle detection pulse signals output outputted synchronously from different output ports 70 illustrated in Figs. 1A and 1B. Synchronized output allows for alignment of the times of the vehicle detection and axle detection pulse signals. In the example illustrated in Fig. 8A, voltage pulse signals are outputted, but current or resistance pulse signals may also be outputted.

A plurality of attribute data may also be superimposed and outputted as a single pulse signal. Fig. 8B is a diagram schematically illustrating an example in which the vehicle detection and axle detection pulse signals in Fig. 8A are superimposed and outputted. When the voltage value of the pulse signal is $V_1$ or higher, the detection of a moving body can be determined, and when the voltage value is $V_2$, the detection of a rotating wheel can be determined. The voltage value $V_2$ is higher than the voltage value $V_1$. As illustrated in Fig. 8B, a plurality of attribute data can be combined into one and expressed through changes in voltage value.

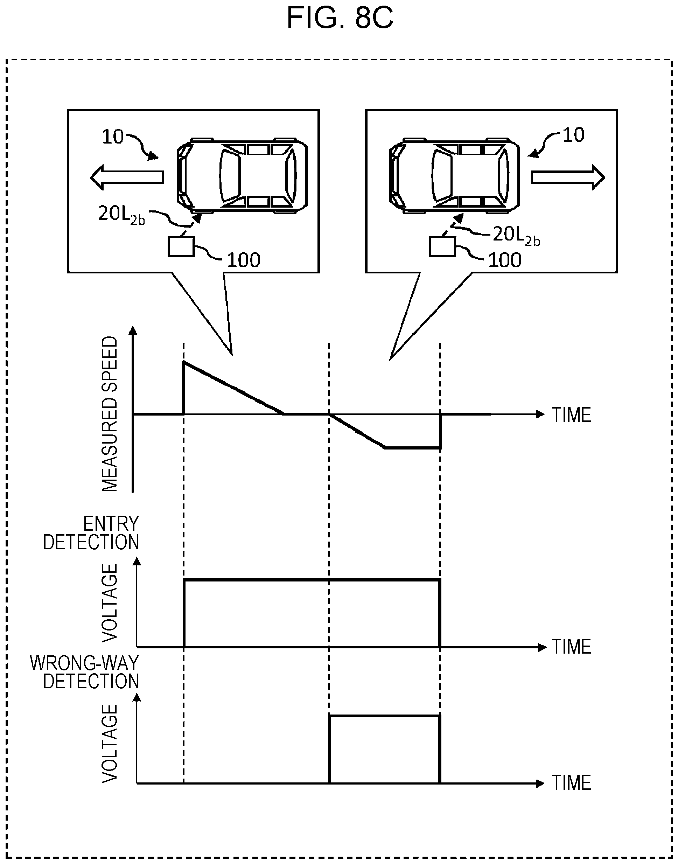

Attribute data obtained by using the property whereby the measured speed may be not only a positive value but also a negative value may be outputted as a pulse signal. Fig. 8C is a diagram schematically illustrating an example of outputting entry detection and wrong-way detection of the moving body 10 as pulse signals. Fig. 8C illustrates a situation in which the moving body 10 is entering and a situation in which the moving body 10 is going the wrong way. A pulse signal corresponding to the period in which the measured distance is non-zero is outputted as a pulse signal for entry detection of the moving body 10. A pulse signal corresponding to the period in which the measured speed is negative is outputted as a pulse signal for wrong-way detection of the moving body 10. Outputting the entry detection and wrong-way detection as separate pulse signals facilitates the processing of attribute data in a downstream system. For example, normal processing may be performed when the moving body 10 entering the lane passes through normally, and exception processing may be performed when the moving body 10 goes the wrong way in the lane. In such cases, outputting the entry detection and wrong-way detection as different pulse signals allow for the construction of a system that can respond differently depending on whether the moving body 10 passes through normally or goes the wrong way. As above, various attribute data pertaining to the moving body 10 can be acquired from the measurement data on the moving body 10. Specifically, the attribute data may be at least one selected from the group consisting of vehicle length, vehicle width, vehicle height, number of axles, wheel-to-wheel distance, vehicle type, vehicle pass-through, vehicle detection axle detection, entry detection and wrong-way detection. Outputting the attribute data and the distance and speed data serving as the basis for the output data from different output ports depending on the case makes it possible to process a plurality of attribute data in parallel in a downstream system and facilities the construction of the system. In this way, in the measurement device 100 according to the present embodiment and the measurement device 110 according to the modification, outputting the plurality of attribute data and the distance and speed data separately from the plurality of output ports 70 may be desirable in some cases.

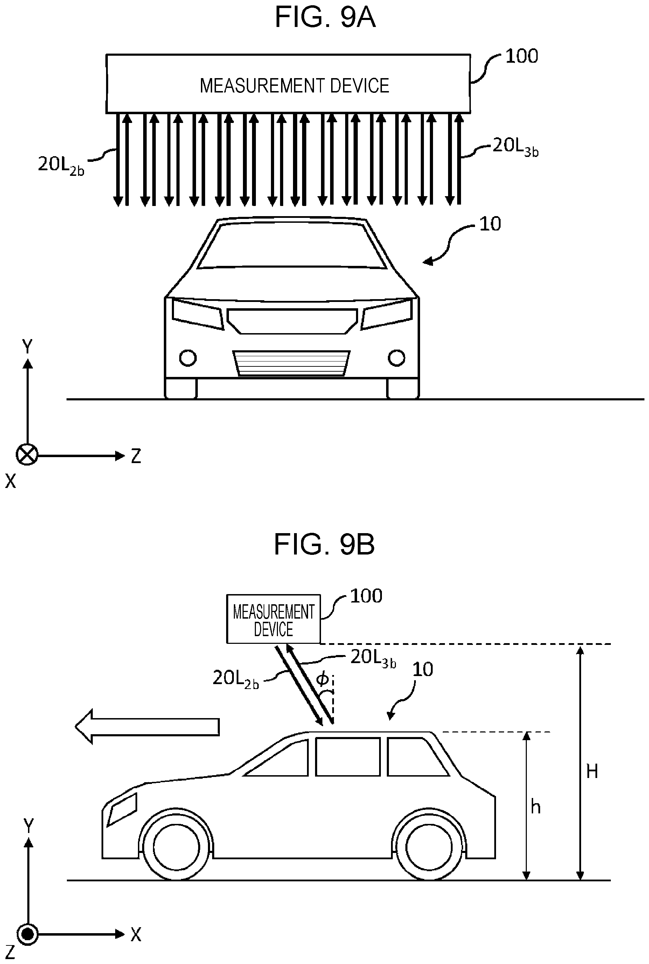

The measurement device 100 may be provided above rather than beside the moving body 10. Next, Figs. 9A and 9B will be referenced to describe an example in which the moving body 10 is irradiated by a plurality of light beams $20L_{2b}$ from above. Figs. 9A and 9B are a front view and a side view, respectively, that schematically illustrate an example in which the moving body 10 is irradiated by a plurality of light beams $20L_{2b}$ from above. In Fig. 9B, the plurality of light beams $20L_{2b}$ overlap one another and are illustrated as a single light beam $20L_{2b}$. The same applies to the reflected light beams $20L_{3b}$. In the example illustrated in Figs. 9A and 9B, the top surface of the moving body 10 is irradiated by the plurality of light beams $20L_{2b}$. The top surface of the moving body 10 refers to the portion of the moving body 10 that is visible when viewed from the +Y direction, or in other words, in a top view. The angle $\varphi$ illustrated in Fig. 9B denotes the angle between the light beams $20L_{2b}$ and the YZ plane. The angle $\varphi$ may have not only a positive value but also a negative value. When the angle $\varphi$ is a positive value, the plurality of light beams $20L_{2b}$ are emitted toward the moving body 10 from ahead, whereas when the angle $\varphi$ is a negative value, the plurality of light beams $20L_{2b}$ are emitted toward the moving body 10 from behind. In the example illustrated in Fig. 9B, the absolute value of the angle $\varphi$ may be greater than 0° and less than or equal to 85°, for example. A more preferable absolute value of the angle $\varphi$ may be equal to or greater than 5° and less than or equal to 30°. The plurality of light beams $20L_{2b}$ are parallel to the XY plane. Furthermore, the plurality of light beams $20L_{2b}$ exist in the plane which is perpendicular to the XY plane and which intersects the YZ plane at the angle $\varphi$. A plurality of channels in which the plurality of light beams $20L_{2b}$ are respectively emitted are arranged in a column in the direction perpendicular to the XY plane.

As illustrated in Fig. 9A, from the plurality of reflected light beams $20L_{3b}$ respectively generated by emitting the plurality of light beams $20L_{2b}$ from above, the width of the moving body 10 and the height, relative to the road surface, of an irradiated spot in the lateral direction of the moving body 10 can be ascertained. In the example illustrated in Fig. 9B, h denotes the height, relative to the road surface, of an irradiated spot where the moving body 10 is irradiated by a light beam $20L_{2b}$, H denotes the height, relative to the road surface, of an emission spot where a light beam $20L_{2b}$ is emitted from the measurement device 100, and L denotes the distance between the irradiated spot and the emission spot. In this case, the height h of the irradiated spot relative to the road surface is expressed by the following formula (5).
[Math. 5]

$$ h = H - L \cos\phi \qquad (5) $$

In the example illustrated in Figs. 9A and 9B, the hood, windshield, roof, back glass, and trunk of the moving body 10 are irradiated by the plurality of light beams $20L_{2b}$. The vehicle height is the highest height from among the heights of the plurality of irradiated spots relative to the road surface. Since the roof of the moving body 10 can be irradiated by the light beams $20L_{2b}$, the vehicle height can be ascertained accurately. Furthermore, since the front portion of the hood and the rear portion of the trunk of the moving body 10 can be irradiated by the light beams $20L_{2b}$, the vehicle length can be ascertained accurately. When a light beam $20L_{2b}$ emitted from a certain channel irradiates the road surface, the height of the irradiated spot relative to the road surface is zero. The vehicle width can be ascertained by excluding the channels in which such a result is obtained from among the plurality of channels. In the case in which the plurality of light beams $20L_{2b}$ are parallel to the XY plane, which of the plurality of channels the moving body 10 has passed underneath can be known easily.

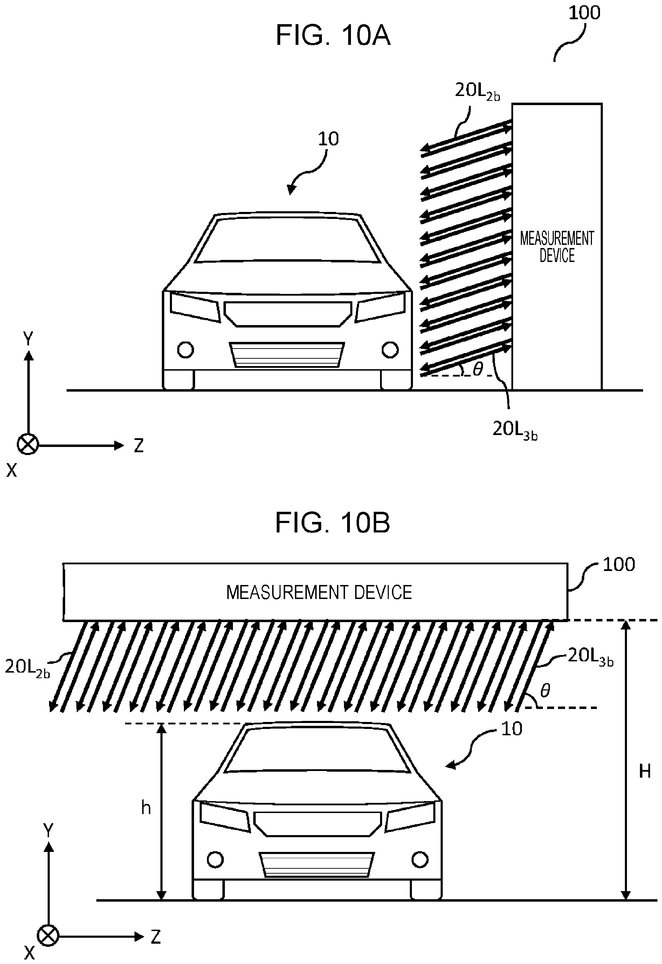

Next, Figs. 10A and 10B will be referenced to describe an example in which the moving body 10 is irradiated by a plurality of light beams $20L_{2b}$ from a direction different from the above-described. Fig. 10A is a front view schematically illustrating yet another example in which the moving body 10 is irradiated by the plurality of light beams $20L_{2b}$ from the side. As illustrated in Fig. 10A, the plurality of light beams $20L_{2b}$ may all be non-parallel to the XZ plane. The angle $\theta$ illustrated in Fig. 10A denotes the angle between each of the plurality of light beams $20L_{2b}$ and the XZ plane. The plurality of light beams $20L_{2b}$ intersect the YZ plane at the angle $\varphi$ as illustrated in Fig. 3B. The plurality of light beams $20L_{2b}$ exist in the plane which is perpendicular to the XZ plane and which intersects the YZ plane at the angle $\varphi$. The height, relative to the road surface, of an irradiated spot where the moving body 10 is irradiated by the light beams $20L_{2b}$ is expressed by formula (4). In the example illustrated in Fig. 10A, the roof of the moving body 10 can be irradiated by the light beams $20L_{2b}$ emitted from the upper channels, and therefore the vehicle height can be ascertained accurately. Furthermore, since the front portion of the hood and the rear portion of the trunk of the moving body 10 can be irradiated by the light beams $20L_{2b}$, the vehicle length can be ascertained accurately. In the lower channels, the number of rotating wheels can be counted as described above.

Fig. 10B is a front view schematically illustrating another example in which the moving body 10 is irradiated by the light beams $20L_{2b}$ from above. As illustrated in Fig. 10B, the plurality of light beams $20L_{2b}$ may all be non-parallel to the XY plane. The angle $\theta$ illustrated in Fig. 10B denotes the angle between the light beams $20L_{2b}$ and the XZ plane. The plurality of light beams $20L_{2b}$ intersect the YZ plane at the angle $\varphi$ as illustrated in Fig. 9B. The plurality of light beams $20L_{2b}$ exist in the plane which is perpendicular to the XY plane and which intersects the YZ plane at the angle $\varphi$. When the plurality of light beams $20L_{2b}$ are parallel to the XY plane as illustrated in Fig. 9A, $\theta + \varphi = 90°$. When the

plurality of light beams $20L_{2b}$ are non-parallel to the XY plane as illustrated in Fig. 10B, $\theta + \varphi \neq 90°$.

In the example illustrated in Fig. 10B, h denotes the height, relative to the road surface, of an irradiated spot where the moving body 10 is irradiated by a light beam $20L_{2b}$, H denotes the height, relative to the road surface, of an emission spot where a light beam $20L_{2b}$ is emitted from the measurement device 100, and L denotes the distance between the irradiated spot and the emission spot. In this case, the height h of the irradiated spot relative to the road surface is expressed by the following formula (6).

[Math. 6]

$$h = H - L \sin \theta \qquad (6)$$

When the moving body 10 is irradiated by the light beams $20L_{2b}$ from above, the height of the irradiated position relative to the road surface can be ascertained even when the plurality of light beams $20L_{2b}$ are non-parallel to the XY plane. Furthermore, in the example illustrated in Fig. 10B, the rotating wheels can be irradiated by the light beams $20L_{2b}$ emitted from the channels near the right end when viewed from the -X direction, and thus the number of rotating axles can be counted.

In the examples illustrated in Figs. 10A and 10B, it is not necessary for the plurality of light beams $20L_{2b}$ to all have the same emission direction. A portion of the plurality of light beams $20L_{2b}$ may have an emission direction that differs from the emission direction of the remaining portion, or all of the emission directions may differ from one another. The measurement device 100 may be further provided with an optical deflector that varies the emission direction of the plurality of light beams $20L_{2b}$. The processing circuit 60 may cause the optical deflector to vary the emission direction of some or all of the plurality of light beams $20L_{2b}$, depending on the purpose and use.

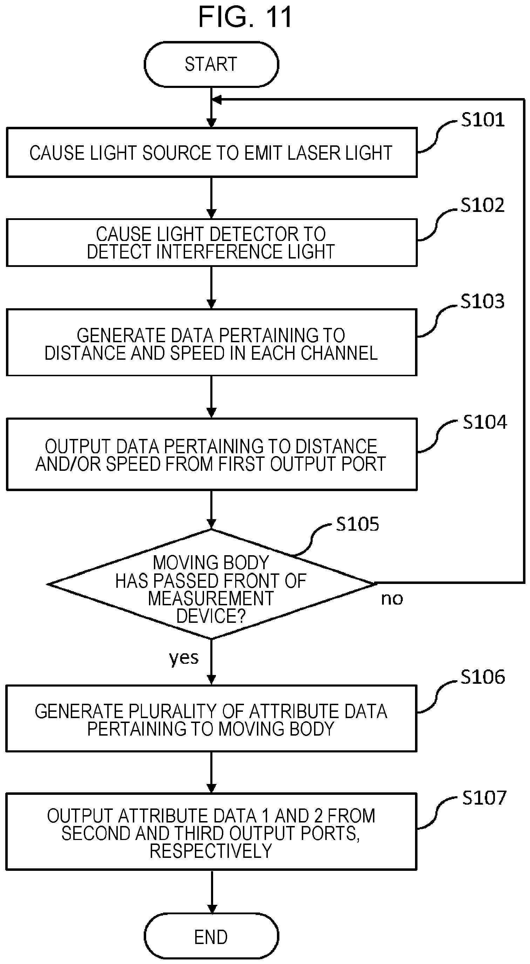

Next, Fig. 11 will be referenced to describe an example of measurement operations executed by the processing circuit 60. Fig. 11 is a flowchart illustrating an example of measurement operations executed by the processing circuit 60. When the moving body 10 enters the lane, the processing circuit 60 executes the operations in the following steps S101 to S107.

<Step S101>

The processing circuit 60 causes the light source 20 to emit laser light $20L_0$ while varying the frequency of the laser light $20L_0$.

<Step S102>

The processing circuit 60 causes the light detector 50 to detect interference light $20L_4$. The light detector 50 outputs a signal corresponding to the intensity of the interference light $20L_4$.

<Step S103>

The processing circuit 60 generates data pertaining to the distance from the measurement device 100 to the moving body 10 and data pertaining to the speed of the moving body 10 in each channel, on the basis of the signal outputted from the light detector 50. Since the plurality of reflected light beams $20L_{3b}$ arrive at the light detector 50 at different timings, it is ascertained which portion of the change over time in the interference light $20L_4$ corresponds to which channel.

<Step S104>

The processing circuit 60 outputs the data pertaining to distance and/or speed from the first output port 70a illustrated in Fig. 1A or 1B. For example, the data pertaining to distance and speed is outputted from the first output port 70a sequentially for a plurality of channels and for a certain time. In the example illustrated in Figs. 4A and 4B, the measured distance in ch. 1, the measured speed in ch. 1, the measured distance in ch. 2, the measured speed in ch. 2, the measured distance in ch. 3, and the measured speed in ch. 3 for a certain time are outputted from the first output port 70a in the above order.

<Step S105>

The processing circuit 60 determines whether the moving body 10 has passed the front of the measurement device 100. In a configuration in which a beam damper is not installed, the processing circuit 60 can determine that the moving body 10 has passed the front of the measurement device 100 when the measured speed is zero and the measured distance is longer than the prescribed distance in all channels. Alternatively, in a configuration in which a beam damper is installed, the processing circuit 60 can determine that the moving body 10 has passed the front of the measurement device 100 when a reflected light beam $20L_{3b}$ is not detected in any of the channels. If the determination is Yes, the processing circuit 60 executes the operations in step S105. If the determination is No, the processing circuit 60 executes the operations in step S101 again.

<Step S106>

The processing circuit 60 generates a plurality of attribute data pertaining to the moving body 10 on the basis of the measurement data on the moving body 10 obtained by processing the signal outputted from the light detector 50. The generation of the attribute data on 10 of the moving body is as described with reference to Fig. 7.

<Step S107>

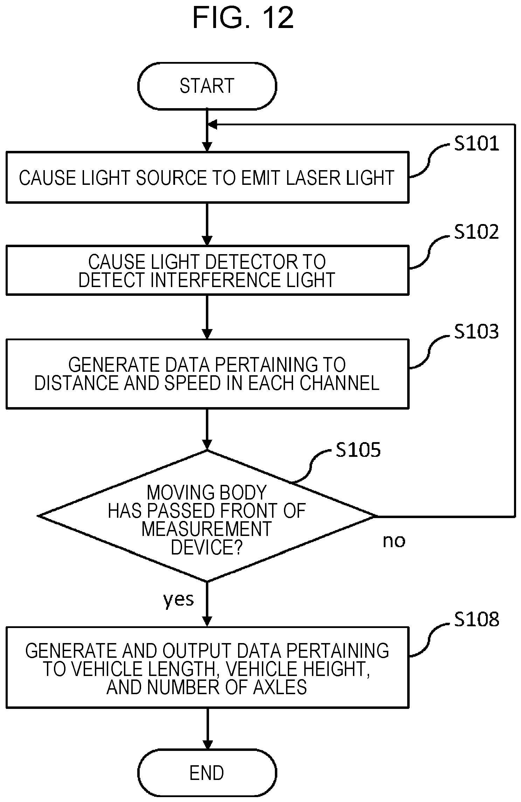

From among the plurality of attribute data, the processing circuit 60 outputs attribute data 1 and 2 as respective pulse signals from the second output port 70b and third output port 70c illustrated in Fig. 1A or 1B. The attribute data 1 and 2 may be, for example, data indicating the vehicle length and vehicle height, respectively. By associating vehicle lengths with voltage values, the vehicle length is ascertained from the voltage value of a pulse signal. The same applies to vehicle length, vehicle width, vehicle height, number of axles, wheel-to-wheel distance, and vehicle type. The attribute data may be data that is not time-dependent, such as vehicle length, vehicle height, vehicle width, and wheel-to-wheel distance, but may also be temporal data, such as the vehicle detection and axle detection pulse signals illustrated in Figs. 8A and 8B and the entry detection and wrong-way detection pulse signals illustrated in Fig. 8C.
Note that the processing circuit 60 may also not execute the operations in step S104. Alternatively, the processing circuit 60 may execute the operations to generate and output temporal data pertaining to distance and/or speed from the first output port after step S105, S106, or S107.
The processing circuit 60 may also output the above attribute data to a display device, for example. The display device displays attribute information pertaining to the moving body 10. In this case, output information included in the data outputted by the processing circuit 60 is identical to display information to be displayed on the display device.
Alternatively, the processing circuit 60 may output measurement data used to generate attribute data to another terminal. The other terminal includes a processing circuit and a display device. In the other terminal, the processing circuit generates attribute data on the basis of the measurement data and outputs the generated attribute data to the display device, and the display device displays attribute information pertaining to the moving body 10. In this case, output information included in the data outputted by the processing circuit 60 is different from display information to be displayed on the display device.
As above, in the measurement device 100 according to the present embodiment and the measurement device 110 according to the modification, a plurality of attribute data pertaining to the moving body 10 can be generated with a single enclosure. In the measurement device 100, 110, the optical splitter 40 can be used to obtain a plurality of light beams $20L_{2b}$ from a single light source 20. Furthermore, in the measurement device 100, 110, the differences in the timings at which the plurality of reflected light beams $20L_{3b}$ return can be utilized to detect the plurality of reflected light beams $20L_{3b}$ individually with a single light detector 50.
Next, Fig. 12 will be referenced to describe an example in which the processing circuit 60 generates data pertaining to the vehicle length, vehicle height, and number of axles among the attribute data described above. Fig. 12 is a flowchart illustrating another example of measurement operations executed by the processing circuit 60. The flowchart illustrated in Fig. 12 is more simplified compared to the flowchart illustrated in Fig. 11. When the moving body 10 enters the lane, the processing circuit 60 executes the operations in the following steps S101 to S103, S105, and S108. The operations in steps S101 to S103 and S105 illustrated in Fig. 12 are the same as the operations in steps S101 to S103 and S105 illustrated in Fig. 11.

<Step S108>

The processing circuit 60 generates and outputs data pertaining to some or all of the vehicle length, vehicle height, and number of axles on the basis of the signal outputted from the light detector 50. In this specification, "data pertaining to some or all of the vehicle length, vehicle height, and number of axles" means not only numerical data for some or all of the vehicle length, vehicle height, and number of axles, but also measurement data used to generate such numerical data. The measurement data may be, for example, temporal data pertaining to the distance from the measurement device 100 to the moving body 10 and/or temporal data pertaining to the speed of the moving body 10 in all channels, as illustrated in Figs. 4A and 4B.

In the measurement device 100 according to the present embodiment and the measurement device 110 according to the modification, a single light beam $20L_{2b}$ can also be radiated to ascertain the vehicle length and vehicle height as follows. In the example illustrated in Figs. 9A and 9B, data pertaining to the vehicle length and vehicle height can be generated by irradiating the moving body 10 from above with a single light beam $20L_{2b}$ when the moving body 10 travels over the centerline of the lane. In the examples illustrated in Figs. 4A and 4B, by irradiating the moving body 10 from the side with a single light beam $20L_{2b}$ from ch. 2, it is ascertained that the vehicle length is equal to or greater than the length of the moving body 10 measured in ch. 2 and that the vehicle height is equal to or greater than the height, relative to the road surface, in ch. 2. In this specification, "data pertaining to vehicle length" means not only data indicating the maximum length of the moving body 10, but also data indicating that the vehicle length is equal to or greater than a certain length. Similarly, "data pertaining to vehicle height" means not only data indicating the maximum height of the moving body 10 relative to the road surface, but also data indicating that the vehicle height is equal to or greater than a certain height.

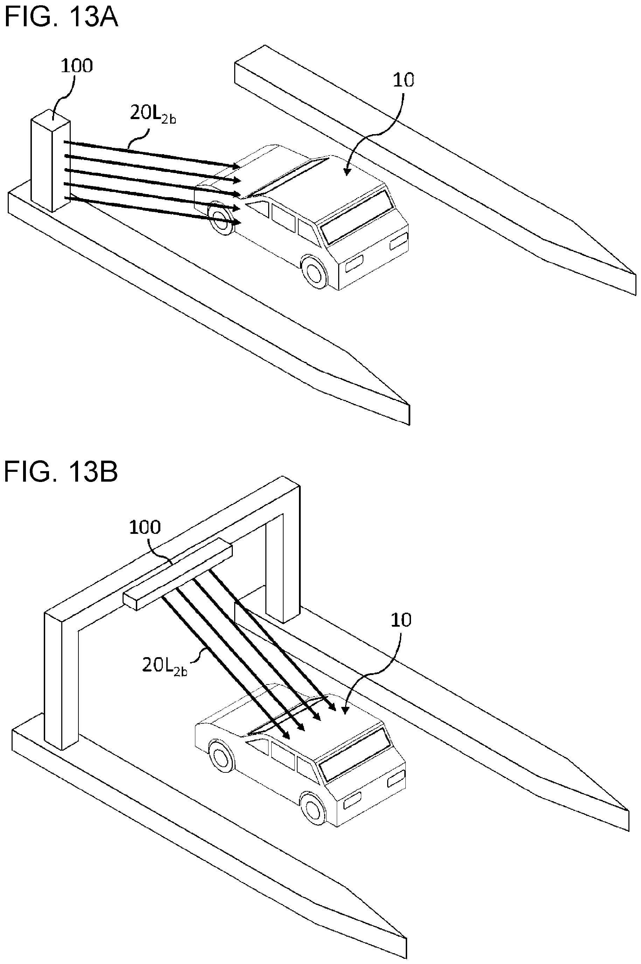

Next, Figs. 13A and 13B will be referenced to describe examples of the installation of the measurement device 100 in ETC. Figs. 13A and 13B are diagrams schematically illustrating examples of the installation of the measurement device 100 in ETC. Figs. 13A and 13B illustrate situations in which the moving body 10 is traveling in an ETC lane.

In the example illustrated in Fig. 13A, the measurement device 100 is installed beside the lane. In the example illustrated in Fig. 13A, the moving body 10 is irradiated from the side by a plurality of light beams $20L_{2b}$ emitted from the measurement device 100. In the example illustrated in Fig. 13B, the measurement device 100 is installed on a gate of the lane. The moving body 10 passes through the gate. In the example illustrated in Fig. 13B, the moving body 10 is irradiated from above by a plurality of light beams $20L_{2b}$ emitted from the measurement device 100. The configuration is not limited to the examples illustrated in Figs. 13A and 13B, and the measurement device 100 may be installed at any position in ETC insofar as the moving body 10 can be irradiated by a plurality of light beams $20L_{2b}$. The measurement device 100 may also be installed apart from the lane.

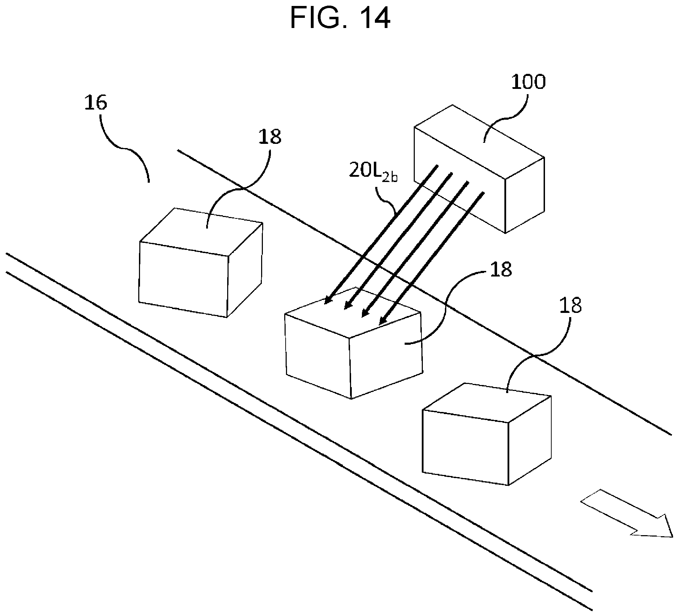

The moving body to be measured in the present embodiment is not necessarily a vehicle traveling on a road surface, and is any object that moves. Next, Fig. 14 will be referenced to describe an example of a moving body other than a vehicle. Fig. 14 is a diagram schematically illustrating the positional relationship of a belt conveyor 16, a plurality of corrugated boxes 18 carried by the belt conveyor 16, and the measurement device 100. The white arrow illustrated in Fig. 14 represents the direction in which the belt conveyor 16 moves. In the example illustrated in Fig. 14, the plurality of corrugated boxes 18 located on the surface of the belt conveyor 16 are sequentially irradiated by a plurality of light beams $20L_{2b}$ emitted from the measurement device 100. By irradiating moving bodies such as corrugated boxes and components in a factory with at least one light beam, it is possible to generate attribute data such as the size of each moving body, including length, width, and height, a category based on the size detection, and an inspection result based on the measurement of the surface shape. Such attribute data is useful for inspection at factories, for example.

Industrial Applicability

A measurement device according to the present disclosure can be used for vehicle detection in ETC and for inspection at factories, for example.

Reference Signs List

| | |
|---|---|
| 10 | moving body |
| 12 | obstacle |
| 14 | tire-wheel assembly |
| 14a | wheel |
| 14b | tire |
| 16 | belt conveyor |
| 18 | corrugated box |
| 20 | light source |
| $20L_0$ | laser light |
| $20L_1$ | reference light |
| $20L_2$ | output light |
| $20L_{2b}$ | light beam |
| $20L_{3b}$ | reflected light beam |
| $20L_4$ | interference light |
| 30 | interference optical system |

| 32 | first fiber splitter |
|---|---|
| 34 | second fiber splitter |
| 36 | optical circulator |
| 40 | optical splitter |
| 42 | optical fiber |
| 44 | collimating lens |
| 50 | light detector |
| 60 | processing circuit |
| 62 | memory |
| 100 | measurement device |

**Claims**

1. A measurement device comprising:

    a light source which emits laser light to irradiate a moving body and which can vary the frequency of the laser light;
    an interference optical system that separates the laser light into reference light and output light, and generates interference light by interfering the reference light with at least one reflected light beam generated when at least one light beam obtained from the output light is reflected by the moving body;
    a light detector that detects the interference light; and
    a processing circuit that processes a signal outputted from the light detector, wherein
    the processing circuit generates and outputs a plurality of attribute data pertaining to the moving body on the basis of measurement data on the moving body obtained by processing the signal.

2. The measurement device according to claim 1, wherein the measurement data includes distance data and speed data, and the plurality of attribute data is generated on the basis of the distance data and speed data.

3. The measurement device according to claim 1, wherein the plurality of attribute data includes at least one piece of information selected from the group consisting of a passing through of the moving body, a size of the moving body, a number of axles on the moving body, a traveling speed of the moving body, a movement direction of the moving body, and a type of the moving body.

4. The measurement device according to claim 1, wherein the plurality of attribute data includes at least one piece of information from among a number of rotating axles of the moving body and a traveling speed of the moving body.

5. The measurement device according to any of claims 1 to 4, wherein the plurality of attribute data is outputted as at least one pulse signal.

6. The measurement device according to claim 5, wherein

    the at least one pulse signal includes a plurality of pulse signals, and
    the measurement device comprises a plurality of output ports from which to output each of the plurality of pulse signals.

7. The measurement device according to claim 6, wherein the plurality of pulse signals are outputted synchronously.

8. The measurement device according to claim 5, wherein

    the at least one pulse signal is a single pulse signal, and
    the plurality of attribute data is superimposed onto the single pulse signal and outputted.

9. The measurement device according to any of claims 1 to 8, wherein an emission direction of the at least one light beam is oblique to a direction of travel of the moving body.

10. The measurement device according to any of claims 1 to 9, wherein

    the at least one light beam includes a plurality of light beams,

the at least one reflected light beam includes a plurality of reflected light beams equal in number to the plurality of light beams,

the measurement device further comprises an optical splitter which includes a plurality of emission ports and which splits the output light to emit light from each of the plurality of emission ports, and

each of the plurality of light beams corresponds to the light emitted from one of the plurality of emission ports included in the optical splitter.

11. The measurement device according to claim 10, wherein the moving body is irradiated from a side by the plurality of light beams.

12. The measurement device according to claim 11, wherein the plurality of light beams are emitted from different heights relative to a surface on which the moving body is located.

13. The measurement device according to claim 12, wherein the plurality of light beams are parallel to the surface.

14. The measurement device according to claim 12, wherein

the moving body includes a wheel, and
one or more light beams from among the plurality of light beams are emitted toward the wheel.

15. The measurement device according to claim 14, wherein the one or more light beams from among the plurality of light beams are non-parallel to the surface, and the remaining light beams are parallel to the surface.

16. The measurement device according to claim 10, wherein the moving body is irradiated from above by the plurality of light beams.

17. The measurement device according to claim 16, wherein the plurality of light beams are parallel to a plane perpendicular to a surface on which the moving body is located and parallel to a direction of travel of the moving body.

18. A measurement device comprising:

a light source which emits laser light to irradiate a moving body on a road surface and which can vary the frequency of the laser light;

an interference optical system that separates the laser light into reference light and output light, and generates interference light by interfering the reference light with a plurality of reflected light beams generated when a plurality of light beams obtained from the output light are each reflected by the moving body;

an optical splitter which includes a plurality of emission ports and which splits the output light to emit the plurality of light beams respectively from the plurality of emission ports;

a light detector that detects the interference light; and

a processing circuit that processes a signal outputted from the light detector, wherein

the processing circuit generates and outputs data pertaining to at least one of the length, the height relative to the road surface, or the speed of the moving body on the basis of the signal outputted from the light detector.

19. A computer program to be executed by a computer in a system that includes a measurement device, the measurement device comprising:

a light source which emits laser light to irradiate a moving body and which can vary the frequency of the laser light;

an interference optical system that separates the laser light into reference light and output light, and generates interference light by interfering the reference light with at least one reflected light beam generated when at least one light beam obtained from the output light is reflected by the moving body;

a light detector that detects the interference light; and

a processing circuit that processes a signal outputted from the light detector,

the computer program causing the computer to generate and output a plurality of attribute data pertaining to the moving body on the basis of measurement data on the moving body obtained by processing the signal.

EP 4 343 273 A1

FIG. 1B

EP 4 343 273 A1

# FIG. 2A

# FIG. 2B

# FIG. 3A

10

Y

Z X

# FIG. 3B

Y X

Z

10

$20L_{3b}$

$20L_{2b}$

φ

100

MEASUREMENT
DEVICE

# FIG. 3C

# FIG. 4A

# FIG. 4B

ch.1

ch.2

ch.3

10

12

ch.1

MEASURED SPEED — TIME

MEASURED DISTANCE — TIME

ch.2

MEASURED SPEED — TIME

MEASURED DISTANCE — TIME

ch.3

MEASURED SPEED — TIME

MEASURED DISTANCE — TIME

# FIG. 5

# FIG. 6A

# FIG. 6B

# FIG. 7

# FIG. 8A

VEHICLE
DETECTION

VOLTAGE

I

TIME

WHEEL
DETECTION

VOLTAGE

IV        V

TIME

# FIG. 8B

I

VOLTAGE

IV        V

$V_2$

$V_1$

TIME

# FIG. 8C

# FIG. 9A

# FIG. 9B

# FIG. 10A

100

20L$_{2b}$

10

MEASUREMENT
DEVICE

$\theta$

20L$_{3b}$

Y

X

Z

# FIG. 10B

MEASUREMENT DEVICE

100

20L$_{2b}$

20L$_{3b}$

$\theta$

10

h

H

Y

X

Z

# FIG. 11

```
        START
          │
          ▼
```

**S101** — CAUSE LIGHT SOURCE TO EMIT LASER LIGHT

**S102** — CAUSE LIGHT DETECTOR TO DETECT INTERFERENCE LIGHT

**S103** — GENERATE DATA PERTAINING TO DISTANCE AND SPEED IN EACH CHANNEL

**S104** — OUTPUT DATA PERTAINING TO DISTANCE AND/OR SPEED FROM FIRST OUTPUT PORT

**S105** — MOVING BODY HAS PASSED FRONT OF MEASUREMENT DEVICE?

no → (loop back to S101)

yes ↓

**S106** — GENERATE PLURALITY OF ATTRIBUTE DATA PERTAINING TO MOVING BODY

**S107** — OUTPUT ATTRIBUTE DATA 1 AND 2 FROM SECOND AND THIRD OUTPUT PORTS, RESPECTIVELY

```
          ▼
         END
```

# FIG. 12

START

CAUSE LIGHT SOURCE TO EMIT LASER LIGHT — S101

CAUSE LIGHT DETECTOR TO
DETECT INTERFERENCE LIGHT — S102

GENERATE DATA PERTAINING TO
DISTANCE AND SPEED IN EACH CHANNEL — S103

MOVING BODY
HAS PASSED FRONT OF
MEASUREMENT
DEVICE? — S105

no

yes

GENERATE AND OUTPUT DATA PERTAINING
TO VEHICLE LENGTH, VEHICLE HEIGHT,
AND NUMBER OF AXLES — S108

END

FIG. 13A

FIG. 13B

# FIG. 14

## INTERNATIONAL SEARCH REPORT

| International application No. |
| --- |
| **PCT/JP2022/004005** |

**A.    CLASSIFICATION OF SUBJECT MATTER**

*G01B 11/04*(2006.01)i; *G01S 17/32*(2020.01)n
FI:    G01B11/04 G; G01S17/32

According to International Patent Classification (IPC) or to both national classification and IPC

**B.    FIELDS SEARCHED**

Minimum documentation searched (classification system followed by classification symbols)

G01B11/00-11/30; G01S7/48-7/51; G01S17/00-17/95; G08G1/00-1/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2011-27648 A (OPTICAL COMB INC) 10 February 2011 (2011-02-10) paragraphs [0022]-[0113], fig. 1-14 | 1-10, 16, 18-19 |
| Y | | 11-15, 17 |
| Y | JP 2019-121106 A (MITSUBISHI HEAVY IND MACH SYSTEMS LTD) 22 July 2019 (2019-07-22) paragraphs [0024]-[0025], fig. 2 | 11-15 |
| Y | JP 2003-203291 A (MITSUBISHI HEAVY IND LTD) 18 July 2003 (2003-07-18) paragraphs [0018], [0022], fig. 1 | 11-15 |
| Y | JP 2008-146298 A (OMRON CORP) 26 June 2008 (2008-06-26) paragraphs [0032]-[0034], [0055]-[0056], fig. 1-2 | 17 |

☐ Further documents are listed in the continuation of Box C.    ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **24 March 2022** | **05 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/004005**

| Patent document cited in search report | | | Publication date (day/month/year) | Patent family member(s) | Publication date (day/month/year) |
|---|---|---|---|---|---|
| JP | 2011-27648 | A | 10 February 2011 | (Family: none) | |
| JP | 2019-121106 | A | 22 July 2019 | (Family: none) | |
| JP | 2003-203291 | A | 18 July 2003 | (Family: none) | |
| JP | 2008-146298 | A | 26 June 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003203291 A
- JP 5478419 B
- JP 2021040245 A

**Non-patent literature cited in the description**

- **CHRISTOPHER V. POULTON et al.** Frequency-modulated Continuous-wave LIDAR Module in Silicon Photonics. *OFC2016,* 2016